(19) Europäisches Patentamt
European Patent Office
Office européen des brevets

(11) **EP 3 921 744 B1**

(12) **EUROPEAN PATENT SPECIFICATION**

(45) Date of publication and mention
of the grant of the patent:
**24.07.2024   Bulletin 2024/30**

(21) Application number: **19918736.0**

(22) Date of filing: **23.12.2019**

(51) International Patent Classification (IPC):
*G06V 10/40* (2022.01)      *G06V 10/70* (2022.01)
*G06F 16/532* (2019.01)     *G06F 18/22* (2023.01)
*G06V 10/74* (2022.01)

(52) Cooperative Patent Classification (CPC):
**G06F 16/532; G06F 18/22; G06V 10/40;
G06V 10/70; G06V 10/761**

(86) International application number:
**PCT/CN2019/127376**

(87) International publication number:
**WO 2020/181873 (17.09.2020 Gazette 2020/38)**

(54) **SYSTEMS AND METHODS FOR IMAGE RETRIEVAL**

SYSTEME UND VERFAHREN ZUR BILDRÜCKGEWINNUNG

SYSTÈMES ET PROCÉDÉS DE RÉCUPÉRATION D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **12.03.2019   CN 201910185837**

(43) Date of publication of application:
**15.12.2021   Bulletin 2021/50**

(73) Proprietor: **Zhejiang Dahua Technology Co., Ltd.**
**Hangzhou, Zhejiang 310053 (CN)**

(72) Inventors:
• **PAN, Huadong**
  **Hangzhou, Zhejiang 310053 (CN)**
• **SUN, He**
  **Hangzhou, Zhejiang 310053 (CN)**
• **LUO, Shixian**
  **Hangzhou, Zhejiang 310053 (CN)**

(74) Representative: **Wang, Bo**
**Panovision IP**
**Ebersberger Straße 3**
**85570 Markt Schwaben (DE)**

(56) References cited:
**CN-A- 106 407 323      CN-A- 106 557 533
CN-A- 110 083 732      US-A1- 2010 266 195**

• **TANG XU ET AL: "Unsupervised Deep Feature
Learning for Remote Sensing Image Retrieval",
REMOTE SENSING, vol. 10, no. 8, 7 August 2018
(2018-08-07), XP055895766, DOI:
10.3390/rs10081243**
• **TALBAR S N ET AL: "iMATCH: Image Matching
and Retrieval for Digital Image Libraries",
EMERGING TRENDS IN ENGINEERING AND
TECHNOLOGY (ICETET), 2009 2ND
INTERNATIONAL CONFERENCE ON, IEEE,
PISCATAWAY, NJ, USA, 16 December 2009
(2009-12-16), pages 196 - 201, XP031617193,
ISBN: 978-1-4244-5250-7**

**Description**

**CROSS-REFERENCE TO RELATED APPLICATIONS**

This application claims priority to Chinese Patent Application No. 201910185837.0 filed on March 12, 2019.

**TECHNICAL FIELD**

The present disclosure generally relates to image processing field, and in particular, to systems and methods for image retrieval.

**BACKGROUND**

With the development of video surveillance technology in various fields (e.g., environment monitoring, security monitoring), the exploration of image retrieval has developed rapidly nowadays. Commonly, an image retrieval system can identify a result image corresponding to a target image from a plurality of candidate images to be retrieved by analyzing a difference degree between the target image and each of plurality of candidate images. However, in some situations, information loss may occur in analyzing the difference degree, which may reduce the efficiency and accuracy of the image retrieval. Therefore, it is desirable to provide systems and methods for executing image retrieval efficiently and accurately. TANG XU ET AL: "Unsupervised Deep Feature Learning for Remote Sensing Image Retrieval",REMOTE SENSING, vol. 10, no. 8, 7 August 2018 (2018-08-07), XP055895766,DOI: 10.3390/ rs10081243, discloses to perform content based image retrieval by applying a bag of words strategy.

**SUMMARY**

The invention is defined by the set of appended claims.

**BRIEF DESCRIPTION OF THE DRAWINGS**

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:

FIG. 1 is a schematic diagram illustrating an exemplary image retrieval system according to some embodiments of the present disclosure;
FIG. 2 is a schematic diagram illustrating exemplary hardware and/or software components of an exemplary computing device according to some embodiments of the present disclosure;
FIG. 3 is a schematic diagram illustrating exemplary hardware and/or software components of an exemplary terminal device according to some embodiments of the present disclosure;
FIG. 4 is a flowchart illustrating an exemplary process for image retrieval according to some embodiments of the present disclosure;
FIG. 5 is a flowchart illustrating an exemplary process for image retrieval according to some embodiments of the present disclosure;
FIG. 6 is a block diagram illustrating an exemplary processing device according to some embodiments of the present disclosure;
FIG. 7 is a flowchart illustrating an exemplary process for image retrieval according to some embodiments of the present disclosure;
FIG. 8 is a flowchart illustrating an exemplary process for determining a difference degree between two images according to some embodiments of the present disclosure;
FIG. 9 is a flowchart illustrating an exemplary process for determining an extended subset corresponding to an image according to some embodiments of the present disclosure;
FIG. 10 is a flowchart illustrating an exemplary process for determining an extended difference degree between a target image and a candidate image according to some embodiments of the present disclosure; and
FIG. 11 is a flowchart illustrating an exemplary process for determining an extended difference degree between a target image and a candidate image according to some embodiments of the present disclosure.

**DETAILED DESCRIPTION**

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been described at a relatively high-level, without detail, in order to avoid unnecessarily obscuring aspects of the present disclosure.

It will be understood that the terms "system," "engine," "unit," "module," and/or "block" used herein are one method to distinguish different components, elements, parts, sections, or assemblies of different levels in ascending order. However, the terms may be displaced by other expression if they may achieve the same purpose.

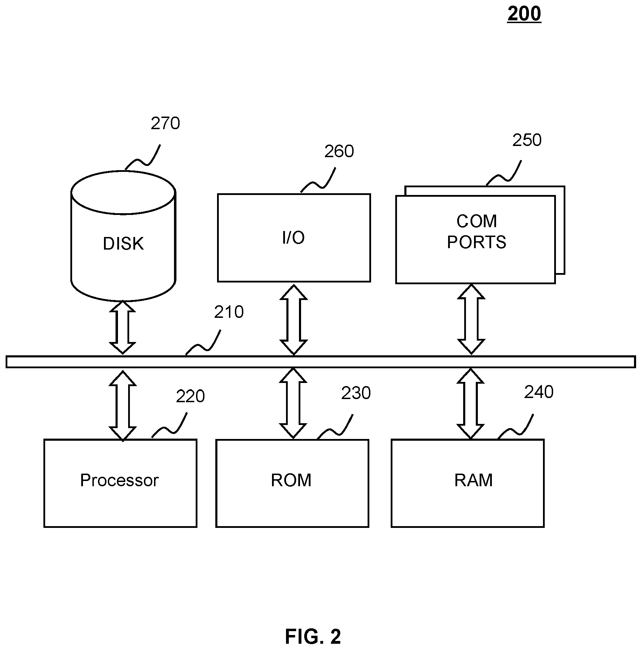

Generally, the words "module," "unit," or "block" used herein, refers to logic embodied in hardware or firmware, or to a collection of software instructions. A module, a unit, or a block described herein may be implemented as software and/or hardware and may be stored in any type of non-transitory computer-readable medium or other storage device. In some embodiments, a software module/unit/block may be compiled and linked into an executable program. It will be appreciated that software modules can be callable from other modules/units/blocks or from themselves, and/or may be invoked in response to detected events or interrupts. Software modules/units/blocks configured for execution on computing devices (e.g., processor 220 illustrated in FIG. 2) may be provided on a computer readable medium, such as a compact disc, a digital video disc, a flash drive, a magnetic disc, or any other tangible medium, or as a digital download (and can be originally stored in a compressed or installable format that needs installation, decompression, or decryption prior to execution). Such software code may be stored, partially or fully, on a storage device of the executing computing device, for execution by the computing device. Software instructions may be embedded in firmware, such as an EPROM. It will be further appreciated that hardware modules (or units or blocks) may be included in connected logic components, such as gates and flip-flops, and/or can be included in programmable units, such as programmable gate arrays or processors. The modules (or units or blocks) or computing device functionality described herein may be implemented as software modules (or units or blocks), but may be represented in hardware or firmware. In general, the modules (or units or blocks) described herein refer to logical modules (or units or blocks) that may be combined with other modules (or units or blocks) or divided into sub-modules (or sub-units or sub-blocks) despite their physical organization or storage.

It will be understood that when a unit, an engine, a module, or a block is referred to as being "on," "connected to," or "coupled to" another unit, engine, module, or block, it may be directly on, connected or coupled to, or communicate with the other unit, engine, module, or block, or an intervening unit, engine, module, or block may be present, unless the context clearly indicates otherwise. As used herein, the term "and/or" includes any and all combinations of one or more of the associated listed items.

The terminology used herein is for the purposes of describing particular examples and embodiments only and is not intended to be limiting. As used herein, the singular forms "a," "an," and "the" may be intended to include the plural forms as well, unless the context clearly indicates otherwise. It will be further understood that the terms "include" and/or "comprise," when used in this disclosure, specify the presence of integers, devices, behaviors, stated features, steps, elements, operations, and/or components, but do not exclude the presence or addition of one or more other integers, devices, behaviors, features, steps, elements, operations, components, and/or groups thereof.

In addition, it should be understood that in the description of the present disclosure, the terms "first", "second", or the like, are only used for the purpose of differentiation, and cannot be interpreted as indicating or implying relative importance, nor can be understood as indicating or implying the order.

The flowcharts used in the present disclosure illustrate operations that systems implement according to some embodiments of the present disclosure. It is to be expressly understood, the operations of the flowcharts may be implemented not in order. Conversely, the operations may be implemented in inverted order, or simultaneously. Moreover, one or more other operations may be added to the flowcharts. One or more operations may be removed from the flowcharts.

An aspect of the present disclosure relates to systems and methods for image retrieval. For a target image, the system determines a plurality of candidate images to be retrieved associated with the target image and specify an image set including the plurality of candidate images and the target image. Further, the system determines a plurality of difference degrees associated with the image set, each of the plurality of difference degrees corresponding to two images in the image set. For each image in the image set, the system determines an extended subset based on the plurality of difference degrees. Also, for each of the plurality of candidate images, the system determines an extended difference degree between the candidate image and the target image based on the extended subset corresponding to the candidate image and the extended subset corresponding to the target image. Further, the system identifies a result image corresponding to the target image from the plurality of candidate images based on a plurality of extended difference degrees corresponding to the plurality of candidate images.

According to the systems and methods of the present disclosure, when determining the difference degree between any two images, a neural network with a hash coding layer and a binary coding layer is used, which can improve processing speed and reduce storage consumption. Further, for the candidate images to be retrieved, extended subsets are determined and extended difference degrees between the candidate images and the target image are used for identifying the result image, which can improve the efficiency and accuracy of the image retrieval.

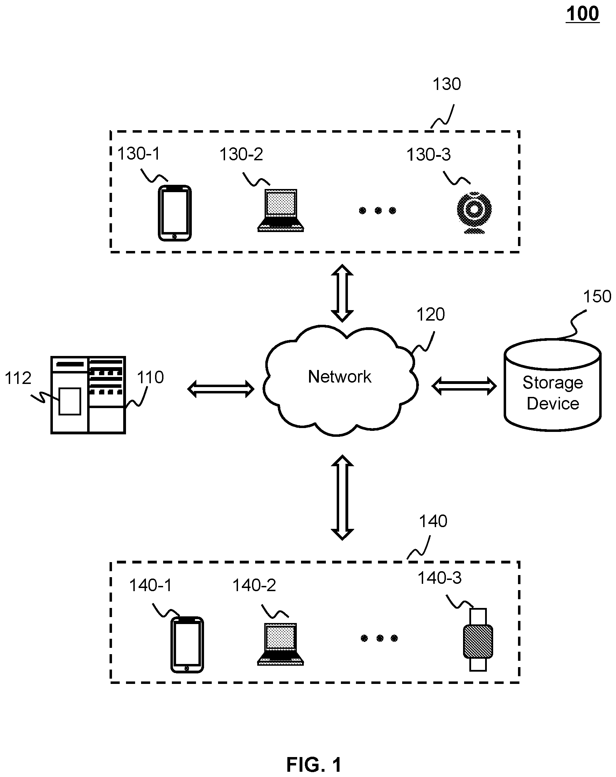

FIG. 1 is a schematic diagram illustrating an exemplary image retrieval system according to some embodiments of the present disclosure. As shown, the image retrieval system 100 may include a server 110, a network 120, an acquisition device 130, a user device 140, and a storage device 150. In some embodiments, the image retrieval system 100 may be applied in various fields, for example, security monitoring, environment monitoring, etc. Take traffic security monitoring as an example, the image retrieval system 100 may determine a plurality of candidate images to be retrieved associated with a target image (e.g., an image including a specific pedestrian) and identify a result image (e.g., an image including the same pedestrian) corresponding to the target image.

The server 110 may be a single server or a server group. The server group may be centralized or distributed (e.g., the server 110 may be a distributed system). In some embodiments, the server 110 may be local or remote. For example, the server 110 may access information and/or data stored in the acquisition device 130, the user device 140, and/or the storage device 150 via the network 120. As another example, the server 110 may be directly connected to the acquisition device 130, the user device 140, and/or the storage device 150 to access stored information and/or data. In some embodiments, the server 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the server 110 may be implemented on a computing device 200 including one or more components illustrated in FIG. 2 of the present disclosure.

In some embodiments, the server 110 may include a processing device 112. The processing device 112 may process information and/or data relating to image retrieval to perform one or more functions described in the present disclosure. For example, the processing device 112 may determine a plurality of difference degrees associated with an image set including a plurality of candidate images and a target image. Also, for each image in the image set, the processing device 112 may determine an extended subset based on the plurality of difference degrees. Further, for each of the plurality of candidate images, the processing device 112 may determine an extended difference degree based on the extended subset corresponding to the candidate image and the extended subset corresponding to the target image. Finally, the processing device 112 may identify a result image corresponding to the target image from the plurality of candidate images based on a plurality of extended difference degrees. In some embodiments, the processing device 112 may include one or more processing devices (e.g., single-core processing device(s) or multi-core processor(s)). Merely by way of example, the processing device 112 may include a central processing unit (CPU), an application-specific integrated circuit (ASIC), an application-specific instruction-set processor (ASIP), a graphics processing unit (GPU), a physics processing unit (PPU), a digital signal processor (DSP), a field programmable gate array (FPGA), a programmable logic device (PLD), a controller, a microcontroller unit, a reduced instruction-set computer (RISC), a microprocessor, or the like, or any combination thereof.

In some embodiment, the sever 110 may be unnecessary and all or part of the functions of the server 110 may be implemented by other components (e.g., the acquisition device 130, the user device 140) of the image retrieval system 100. For example, the processing device 112 may be integrated in the acquisition device 130 or the user device140 and the functions (e.g., identifying a result image) of the processing device 112 may be implemented by the acquisition device 130 or the user device140.

The network 120 may facilitate exchange of information and/or data for the image retrieval system 100. In some embodiments, one or more components (e.g., the server 110, the acquisition device 130, the user device 140, the storage device 150) of the image retrieval system 100 may transmit information and/or data to other component(s) of the image retrieval system 100 via the network 120. For example, the server 110 may obtain a target image from the acquisition device 130 via the network 120. In some embodiments, the network 120 may be any type of wired or wireless network, or combination thereof. Merely by way of example, the network 120 may include a cable network (e.g., a coaxial cable network), a wireline network, an optical fiber network, a telecommunications network, an intranet, an Internet, a local area network (LAN), a wide area network (WAN), a wireless local area network (WLAN), a metropolitan area network (MAN), a public telephone switched network (PSTN), a Bluetooth network, a ZigBee network, a near field communication (NFC) network, or the like, or any combination thereof.

The acquisition device 130 may be configured to acquire an image (the "image" herein refers to a single image or a frame of a video). In some embodiments, the acquisition device 130 may include a mobile device 130-1, a computer 130-2, a camera device 130-3, etc. The mobile device 130-1 may include a smart home device, a smart mobile phone, or the like, or any combination thereof. The computer 130-2 may include a laptop, a tablet computer, a desktop, or the like, or any combination thereof. The camera device 130-3 may include a gun camera, a dome camera, an integrated camera, a monocular camera, a binocular camera, a multi-view camera, or the like, or any combination thereof. The image acquired by the acquisition device 130 may be a two-dimensional image, a three-dimensional image, a four-dimensional image, etc. In some embodiments, the acquisition device 130 may include a plurality of components each of which can acquire an image. For example, the acquisition device 130 may include a plurality of sub-cameras that can take pictures or videos simultaneously. In some embodiments, the acquisition device 130 may transmit the acquired image to one or more components (e.g., the server 110, the user device 140, the storage device 150) of the image retrieval system 100 via the network 120.

The user device 140 may be configured to receive information and/or data from the server 110, the acquisition device 130, and/or the storage device 150 via the network 120. For example, the user device 140 may receive information associated with a result image corresponding to the target image from the server 110. In some embodiments, the user device 140 may provide a user interface via which a user may view information and/or input data and/or instructions to the image retrieval system 100. For example, the user may view the result image received from the server 110 via the user interface. As another example, the user may input an instruction associated with a parameter of the image retrieval via the user interface. In some embodiments, the user device 140 may include a mobile phone 140-1, a computer 140-2, a wearable device 140-3, etc. In some embodiments, the user device 140 may include a display that can display information in a human-readable form, such as text, image, audio, video, graph, animation, or the like, or any combination thereof. The display of the user device 140 may include a cathode ray tube (CRT) display, a liquid crystal display (LCD), a light emitting diode (LED) display, a plasma display panel (PDP), a three dimensional (3D) display, or the like, or a combination thereof. In some embodiments, the user device 140 may be connected to one or more components (e.g., the server 110, the acquisition device 130, the storage device 150) of the image retrieval system 100 via the network 120.

The storage device 150 may be configured to store data and/or instructions. The data and/or instructions may be obtained from, for example, the server 110, the acquisition device 130, the user device 140, and/or any other component of the image retrieval system 100. In some embodiments, the storage device 150 may store data and/or instructions that the server 110 may execute or use to perform exemplary methods described in the present disclosure. For example, the storage device 150 may store a target image acquired by the acquisition device 130 or any information (e.g., an extended subset) associated with the target image. In some embodiments, the storage device 150 may include a mass storage, a removable storage, a volatile read-and-write memory, a read-only memory (ROM), or the like, or any combination thereof. Exemplary mass storage may include a magnetic disk, an optical disk, a solid-state drive, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (EPROM), an electrically erasable programmable ROM (EEPROM), a compact disk ROM (CD-ROM), and a digital versatile disk ROM, etc. In some embodiments, the storage device 150 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the storage device 150 may be connected to the network 120 to communicate with one or more components (e.g., the server 110, the acquisition device 130, the user device 140) of the image retrieval system 100. One or more components of the image retrieval system 100 may access the data or instructions stored in the storage device 150 via the network 120. In some embodiments, the storage device 150 may be directly connected to or communicate with one or more components (e.g., the server 110, the acquisition device 130, the user device 140) of the image retrieval system 100. In some embodiments, the storage device 150 may be part of another component of the image retrieval system 100, such as the server 110, the acquisition device 130, or the user device 140.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

FIG. 2 is a schematic diagram illustrating exemplary hardware and/or software components of an exemplary computing device according to some embodiments of the present disclosure. In some embodiments, the server 110 may be implemented on the computing device 200. For example, the processing device 112 may be implemented on the computing device 200 and configured to perform functions of the processing device 112 disclosed in this disclosure.

The computing device 200 may be used to implement any component of the image retrieval system 100 as described herein. For example, the processing device 112 may be implemented on the computing device 200, via its hardware, software program, firmware, or a combination thereof. Although only one such computer is shown, for convenience, the computer functions relating to image retrieval as described herein may be implemented in a distributed fashion on a number of similar platforms to distribute the processing load.

The computing device 200, for example, may include COM ports 250 connected to and from a network connected thereto to facilitate data communications. The computing device 200 may also include a processor (e.g., the processor 220), in the form of one or more processors (e.g., logic circuits), for executing program instructions. For example, the processor 220 may include interface circuits and processing circuits therein. The interface circuits may be configured to receive electronic signals from a bus 210, wherein the electronic signals encode structured data and/or instructions for the processing circuits to process. The processing circuits may conduct logic calculations, and then determine a conclusion, a result, and/or an instruction encoded as electronic signals. Then the interface circuits may send out the electronic signals from the processing circuits via the bus 210.

The computing device 200 may further include program storage and data storage of different forms including, for example, a disk 270, a read-only memory (ROM) 230, or a random-access memory (RAM) 240, for storing various data files to be processed and/or transmitted by the computing device 200. The computing device 200 may also include program instructions stored in the ROM 230, RAM 240, and/or another type of non-transitory storage medium to be executed by the processor 220. The methods and/or processes of the present disclosure may be implemented as the program instructions. The computing device 200 may also include an I/O component 260, supporting input/output between the computing device 200 and other components. The computing device 200 may also receive programming and data via network communications.

Merely for illustration, only one processor is illustrated in FIG. 2. Multiple processors 220 are also contemplated; thus, operations and/or method steps performed by one processor 220 as described in the present disclosure may also be jointly or separately performed by the multiple processors. For example, if in the present disclosure the processor 220 of the computing device 200 executes both step A and step B, it should be understood that step A and step B may also be performed by two different processors 220 jointly or separately in the computing device 200 (e.g., a first processor executes step A and a second processor executes step B, or the first and second processors jointly execute steps A and B).

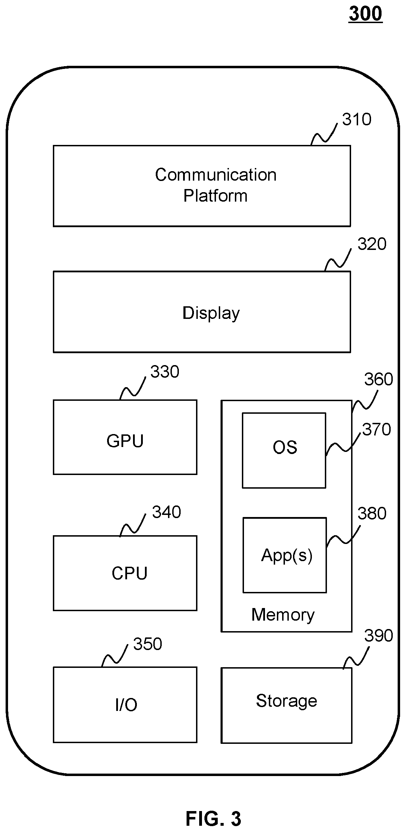

FIG. 3 is a schematic diagram illustrating exemplary hardware and/or software components of an exemplary terminal device according to some embodiments of the present disclosure. In some embodiments, the user device 140 may be implemented on the terminal device 300 shown in FIG. 3. As illustrated in FIG. 3, the terminal device 300 may include a communication platform 310, a display 320, a graphic processing unit (GPU) 330, a central processing unit (CPU) 340, an I/O 350, a memory 360, and a storage 390. In some embodiments, any other suitable component, including but not limited to a system bus or a controller (not shown), may also be included in the terminal device 300.

In some embodiments, an operating system 370 (e.g., iOS™, Android™, Windows Phone™) and one or more applications (Apps) 380 may be loaded into the memory 360 from the storage 390 in order to be executed by the CPU 340. The applications 380 may include a browser or any other suitable mobile apps for receiving and rendering information relating to image retrieval or other information from the processing device 112. User interactions may be achieved via the I/O 350 and provided to the processing device 112 and/or other components of the image retrieval system 100 via the network 120.

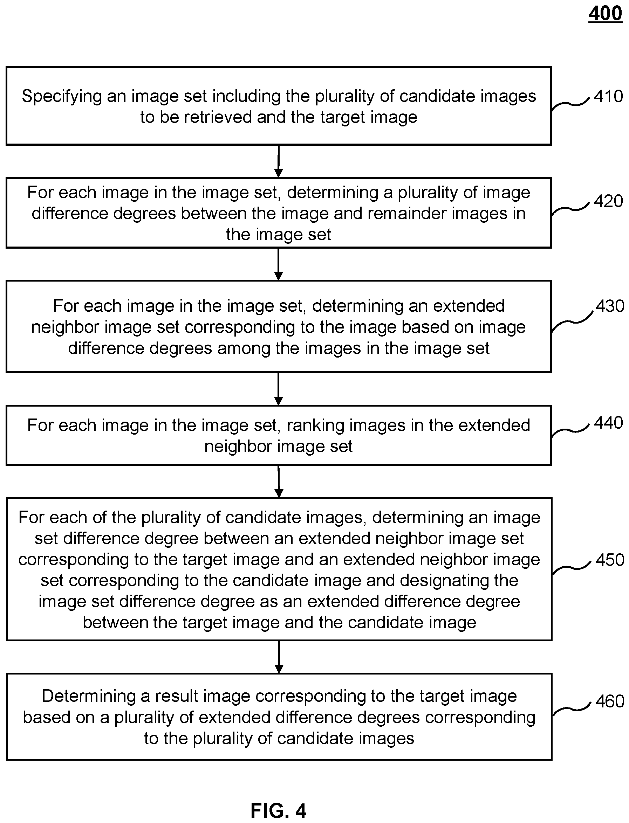

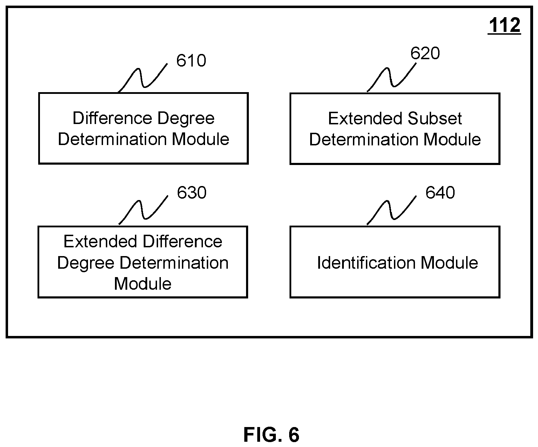

FIG. 4 is a flowchart illustrating an exemplary process for image retrieval according to some embodiments of the present disclosure. In some embodiments, the process 400 may be executed by the image retrieval system 100. For example, the process 400 may be implemented as a set of instructions (e.g., an application) stored in the storage ROM 230 or RAM 240. The processor 220 and/or modules in FIG. 6 may execute the set of instructions, and when executing the instructions, the processor 220 and/or the modules may be configured to perform the process 400. The operations of the illustrated process 400 presented below are intended to be illustrative. In some embodiments, the process 400 may be accomplished with one or more additional operations not described, and/or without one or more of the operations discussed. Additionally, the order in which the operations of the process 400 as illustrated in FIG. 4 and described below is not intended to be limiting.

In 410, an image set including a plurality of candidate images to be retrieved and a target image may be specified. In some embodiments, the image set may be specified by the processing device 112 (e.g., a difference degree determination module 610 illustrated in FIG. 6) (e.g., the processing circuits of the processor 220).

In some embodiments, the plurality of candidate images may be obtained from the acquisition device 130, the user device 140, the storage device 150, an external resource, etc. In some embodiments, the plurality of candidate images may be determined based on one or more image features (e.g., category, color, brightness, size). For example, images corresponding to a same category with the target image may be selected as the plurality of candidate images. As another example, images corresponding to a same object type (e.g., pedestrian) with the target image may be selected as the plurality of candidate images.

In 420, for each image in the image set, a plurality of image difference degrees (also referred to as "difference degrees") between the image and remainder images in the image set may be determined. In some embodiments, the plurality of image difference degrees may be determined by the processing device 112 (e.g., the difference degree determination module 610) (e.g., the processing circuits of the processor 220).

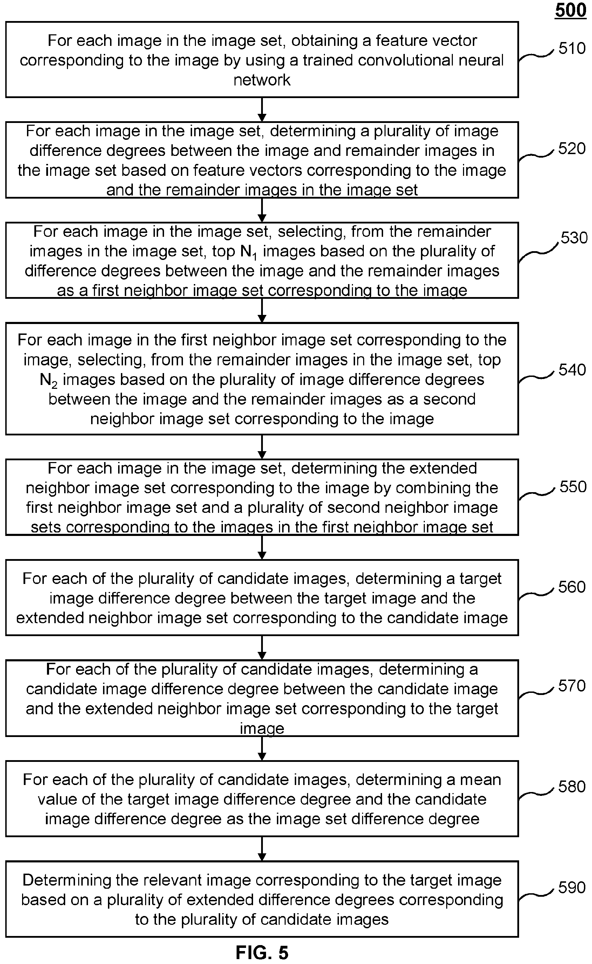

As used herein, take any two images in the image set as an example, the image difference degree indicates a similarity between the two images. In some embodiments, the image difference degree between the two images may be determined based on feature vectors corresponding to the two images. More descriptions of the image difference degree may be found elsewhere in the present disclosure (e.g., FIG. 5, FIG. 7, FIG. 8, and the descriptions thereof).

In 430, for each image in the image set, an extended neighbor image set (also referred to as "extended subset") corresponding to the image may be determined based on image difference degrees among the images in the image set. In some embodiments, the extended neighbor image set may be determined by the processing device 112 (e.g.,

an extended subset determination module 620 illustrated in FIG. 6) (e.g., the processing circuits of the processor 220).

As used herein, taking a specific image (e.g., a candidate image, the target image) in the image set as an example, the extended neighbor image set may be a subset of the image set with the specific image as a center and including images with difference degrees with the specific image satisfying a preset condition. More descriptions regarding determining the extended neighbor image set may be found elsewhere in the present disclosure (e.g., FIG. 5, FIG. 7, FIG. 9, and the descriptions thereof).

In 440, for each image in the image set, images in the extended neighbor image set corresponding to the image may be ranked. In some embodiments, the images in the extended neighbor image set may be ranked by the processing device 112 (e.g., the extended subset determination module 620) (e.g., the processing circuits of the processor 220). In some embodiments, images in the extended neighbor image set may be ranked based on the image difference degrees between the central image and the remainder images in the extended neighbor image set.

In 450, for each of the plurality of candidate images, an image set difference degree between an extended neighbor image set corresponding to the candidate image and an extended neighbor image set corresponding to the target image may be determined and the image set difference degree may be designated as an extended difference degree between the target image and the candidate image. In some embodiments, the image set difference degree may be determined by the processing device 112 (e.g., an extended difference degree determination module 630 illustrated in FIG. 6) (e.g., the processing circuits of the processor 220).

In some embodiments, a first global feature vector of the extended neighbor image set corresponding to the target image and a second global feature vector of the extended neighbor image set corresponding to the candidate image may be determined. Further, the image set difference degree may be determined based on the first global feature vector and the second global feature vector.

A target image difference degree between the target image and the extended neighbor image set corresponding to the candidate image is determined; a candidate image difference degree between the candidate image and the extended neighbor image set corresponding to the target image is also determined. Further, the image set difference degree is determined based on the target image difference degree and the candidate image difference degree. For example, the image set difference degree may be determined as a mean value of the target image difference degree and the candidate image difference degree. More descriptions regarding determining the image set difference degree may be found elsewhere in the present disclosure (e.g., FIG. 5, FIG. 7, FIG. 10, FIG. 11, and the descriptions thereof).

In 460, a relevant image (also referred to as "result image") corresponding to the target image may be determined based on a plurality of extended difference degrees corresponding to the plurality of candidate images. In some embodiments, the result image may be determined by the processing device 112 (e.g., an identification module 640 illustrated in FIG. 6) (e.g., the processing circuits of the processor 220).

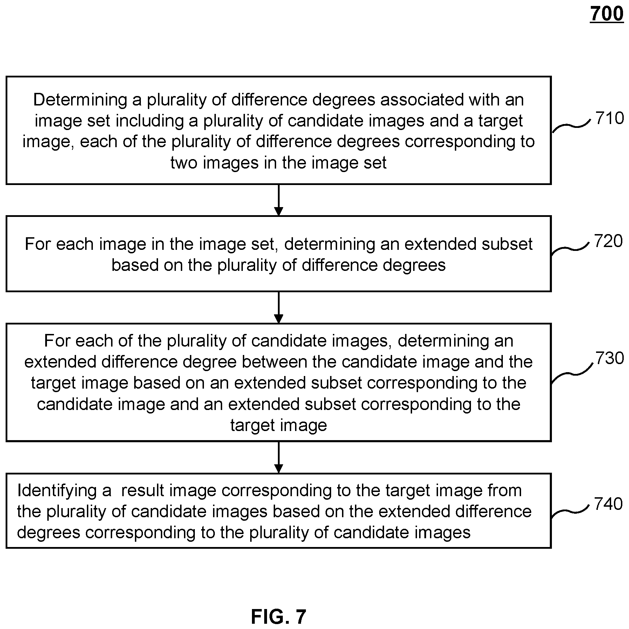

In some embodiments, a candidate image with a smallest extended difference degree may be selected from the plurality of candidate images as the result image corresponding to the target image. In some embodiments, a retrieval accuracy may be determined and an image retrieval process may be iteratively performed until the retrieval accuracy no longer increases. More descriptions regarding determining the result image corresponding to the target image may be found elsewhere in the present disclosure (e.g., FIG. 5, FIG. 7, and the descriptions thereof).

According to some embodiments of the present disclosure, any image in the image set is extended to a corresponding extended neighbor image set based on the image difference degrees among the images in the image set. Then for each candidate image, an image set difference degree between an extended neighbor image set corresponding to the candidate image and an extend neighbor image set is determined as an extended difference degree between the target image and the candidate image, which can improve retrieval accuracy.

It should be noted that the above description is merely provided for the purposes of illustration, and not intended to limit the scope of the present disclosure. For persons having ordinary skills in the art, multiple variations or modifications may be made under the teachings of the present disclosure. For example, for each image in the image set, a further extended neighbor image set may be determined based on the extended difference degrees among the images in the image set. Further, the result image may be identified based the further extended neighbor image sets corresponding to the candidate images and the target image.

FIG. 5 is a flowchart illustrating an exemplary process for image retrieval according to some embodiments of the present disclosure. In some embodiments, the process 500 may be executed by the image retrieval system 100. For example, the process 500 may be implemented as a set of instructions (e.g., an application) stored in the storage ROM 230 or RAM 240. The processor 220 and/or modules in FIG. 6 may execute the set of instructions, and when executing the instructions, the processor 220 and/or the modules may be configured to perform the process 500. The operations of the illustrated process 500 presented below are intended to be illustrative. In some embodiments, the process 500 may be accomplished with one or more additional operations not described, and/or without one or more of the operations discussed. Additionally, the order in which the operations of the process 500 as illustrated in FIG. 5 and described below is not intended to be limiting.

In 510, for each image in the image set, a feature vector corresponding to the image may be obtained by using a trained convolutional neural network. In some embodiments, the feature vector may be obtained by the processing device 112 (e.g., a difference degree determination module 610 illustrated in FIG. 6) (e.g., the processing circuits of the processor 220).

In some embodiments, a hash coding layer may be added between a penultimate layer and the last layer (e.g., a classification layer) in the trained convolutional neural network. For each image in the image set, a hash feature vector corresponding to the image may be obtained by encoding information and/or data (e.g., features) associated with the image using the hash coding layer. For high-dimensional floating-point features of the image, a quantization coding can be implemented by introducing the hash coding layer, which can reduce storage consumption. Further, in order to minimize information loss during the encoding process, a dimension of a hash feature vector output by the hash coding layer is the same as a dimension of an output of the penultimate layer.

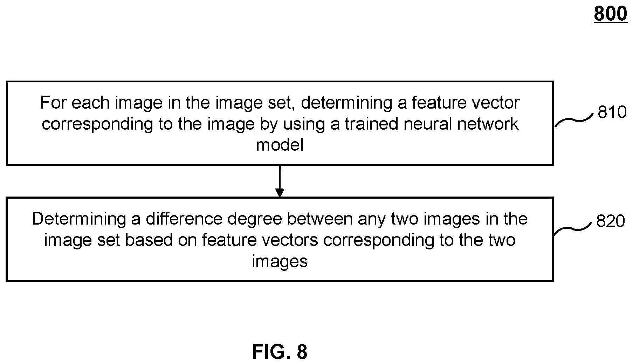

In some embodiments, a binary coding layer may be added after the hash coded layer. The binary coding layer may limit one or more elements in the hash feature vector output by the hash coding layer to [0, 1] by using a binarization function (e.g., a sigmoid function). For example, an element in the hash feature vector may be expanded to 1 when the element is greater than or equal to 0.5; an element in the hash feature vector may be compressed to 0 when the element is less than 0.5. Accordingly, a high-dimensional floating-point feature vector is compressed into a binary hash coding feature vector. More descriptions regarding determining the feature vector may be found elsewhere in the present disclosure (e.g., FIG. 8 and the descriptions thereof).

In 520, for each image in the image set, the plurality of image difference degrees between the image and remainder images in the image set may be determined based on feature vectors (e.g., binary hash feature vectors) corresponding to the image and the remainder images. In some embodiments, the plurality of image difference degrees may be determined by the processing device 112 (e.g., the difference degree determination module 610) (e.g., the processing circuits of the processor 220).

In some embodiments, for each image in the image set, the plurality of image difference degrees between the image and the remainder images in the image set may be determined by determining at least one of a Hamming distance, a Euclidean distance, or a cosine distance based on the feature vectors corresponding to the image and the remainder images in the image set. For example, the image difference degree may be determined by determining the Hamming distance, which can improve retrieval speed. More descriptions regarding determining a difference degree between any two images in the image set may be found elsewhere in the present disclosure (e.g., FIG. 8 and the descriptions thereof).

In 530, for each image in the image set, top $N_1$ images may be selected from the remainder images in the image set based on the plurality of difference degrees between the image and the remainder images as a first neighbor image set (also referred to as "first neighbor subset") corresponding to the image. In some embodiments, the top $N_1$ images may be selected by the processing device 112 (e.g., an extended subset determination module 620 illustrated in FIG. 6) (e.g., the processing circuits of the processor 220).

In some embodiments, for each image in the image set, remainder images in the image set may be ranked based on difference degrees between the remainder images and the image. Take the target image as an example, the target image may be indicated as $q$ and the plurality of candidate images may be indicated as $g_i$, wherein i=1~N and N refers to a count of the plurality of candidate images. Accordingly, the feature vector corresponding to the target image $q$ may be indicated as $H_q$, the plurality of feature vectors corresponding to the plurality of candidate images $g_i$ may be indicated as $H_{gi}$, and the plurality of image difference degrees (e.g., Hamming distances) between the target image $q$ and the plurality of candidate images $g_i$ may be indicated as $d_{q,gi}$. Further, the plurality of candidate images $g_i$ (i.e., the remainder images in the image set for the target image) may be ranked based on the plurality of difference degrees $d_{q,gi}$ between the target image $q$ and the plurality of candidate images $g_i$. For example, the plurality of image difference degrees $d_{q,gi}$ may be ranked from small to large as illustrated below:

$$d_{init} = [d_{q,g1}, \ d_{q,g2}, d_{q,g3}, \dots\dots, \ d_{q,gN}] \qquad (1)$$

where $d_{init}$ refers to a set illustrating the ranking of the plurality of image difference degrees.

Accordingly, the plurality of candidate images may be ranked based on the plurality of image difference degrees as illustrated below:

$$g_{init} = [g_1, \ g_2, \ g_3, \dots\dots, \ g_N] \qquad (2)$$

where $g_{init}$ refers to a set illustrating the ranking of the plurality of candidate images.

Further, a first neighbor image set including top $N_1$ (e.g., $m$) images may be determined based on the ranking result (e.g., $g_{init}$) as illustrated below:

$$E(q, m) = \{g_1, \ g_2, \ g_3, \ldots \ldots, \ g_m\} \tag{3}$$

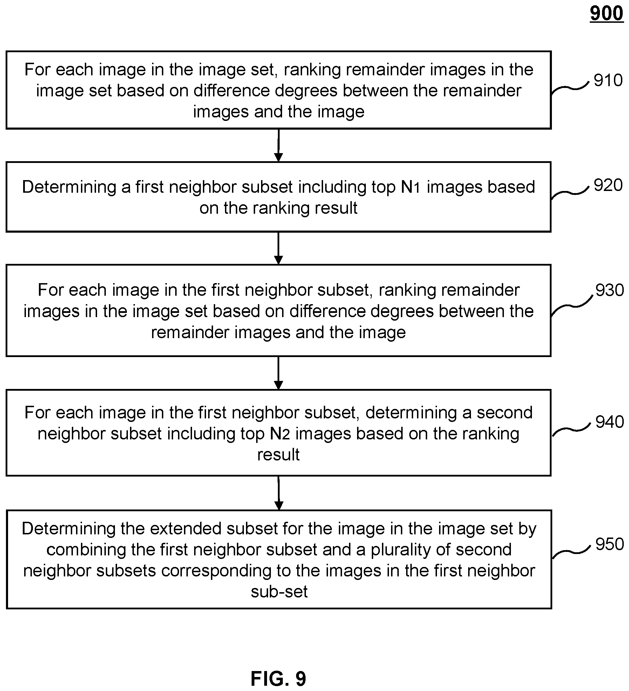

where $E(q, m)$ refers to the first neighbor image set. As used herein, $N_1$ may be a default setting (e.g., 5, 10, 20) of the image retrieval system 100 or may be adjustable under different situations. More descriptions regarding determining the first neighbor image set may be found elsewhere in the present disclosure (e.g., FIG. 9 and the description thereof).

In 540, for each image in the image set, top $N_2$ images may be selected from the remainder images in the image set based on the plurality of image difference degrees between the image and the remainder images as a second neighbor image set (also referred to as "second neighbor subset") corresponding to the image. Further, for each image in the first neighbor image set corresponding to the image, a second neighbor image set corresponding to the image may be obtained. In some embodiments, the top $N_2$ images may be selected by the processing device 112 (e.g., the extended subset determination module 620) (e.g., the processing circuits of the processor 220).

In some embodiments, for each image in the first neighbor image set, remainder images in the image set may be ranked based on difference degrees between the remainder images and the image. Take a specific image (e.g.,$g_1$) in the first neighbor image set $E(q, m)$ as an example, the remainder images in the image set may be ranked based on the difference degrees between the image $g_1$ and the remainder images. For example, the plurality of image difference degrees may be ranked from small to large. Accordingly, the remainder images may be ranked based on the image difference degrees. Further, a second neighbor image set $E(g_1, k)$ including top $N_2$ (e.g., $k$) images may be determined based on the ranking result. As used herein, $N_2$ may be a default setting (e.g., 5, 10, 20) of the image retrieval system 100 or may be adjustable under different situations. More descriptions regarding determining the second neighbor image set may be found elsewhere in the present disclosure (e.g., FIG. 9 and the description thereof).

In 550, for each image in the image set, an extended neighbor image set corresponding to the image may be determined by combining the first neighbor image set and a plurality of second neighbor image sets corresponding to the images in the first neighbor image set. In some embodiments, the extended neighbor image set may be determined by the processing device 112 (e.g., the extended subset determination module 620) (e.g., the processing circuits of the processor 220).

Still take the target image $q$ as an example, the extended neighbor image set corresponding to the target image $q$ may be determined as illustrated below:

$$N(q, t) = \{E(q, m), E(g_1, k), E(g_2, k), \ldots \ldots, E(g_m, k)\} \tag{4}$$

where $N(q, t)$ refers to the extended neighbor image set corresponding to the target image $q$, $E(q, m)$ refers to the first neighbor image set corresponding to the target image $q$, $E(g_1, k)$ refers to the second neighbor image set corresponding to the image $g_1$ in the first neighbor image set $E(q, m)$, and $t = m + m * k$.

In 560, for each of the plurality of candidate images, a target image difference degree (also referred to as "first global difference degree") between the target image and the extended neighbor image set corresponding to the candidate image may be determined. In some embodiments, the target image difference degree may be determined by the processing device 112 (e.g., an extended difference degree determination module 630 illustrated in FIG. 6) (e.g., the processing circuits of the processor 220).

In some embodiments, images in the extended neighbor image set corresponding to the candidate image may be ranked (e.g., from small to large) based on the difference degrees (e.g., the Hamming distance) between the images and the target image. For each image in the extended neighbor image set corresponding to the candidate image, a weighting coefficient corresponding to the image may be determined based on a ranking position of the image. The higher the ranking position of the image is, the larger the weighting coefficient corresponding to the image may be. For example, the weighting coefficient corresponding to the image in the extended neighbor image set corresponding to the candidate image may a reciprocal of the ranking position of the image. Further, the target image difference degree may be determined by weighting a plurality of image difference degrees between the target image and the images in the extended neighbor image set corresponding to the candidate image. Take a specific extended neighbor image set $N(g_i, t)$ corresponding to a candidate image $g_i$ as an example, the target image difference degree may be determined according to formula (5) below:

$$d_1 = \frac{1}{r_{q,j}} d[g_i E_j, q] \tag{5}$$

where $d_1$ refers to the target image difference degree between the target image $q$ and the extended neighbor image set

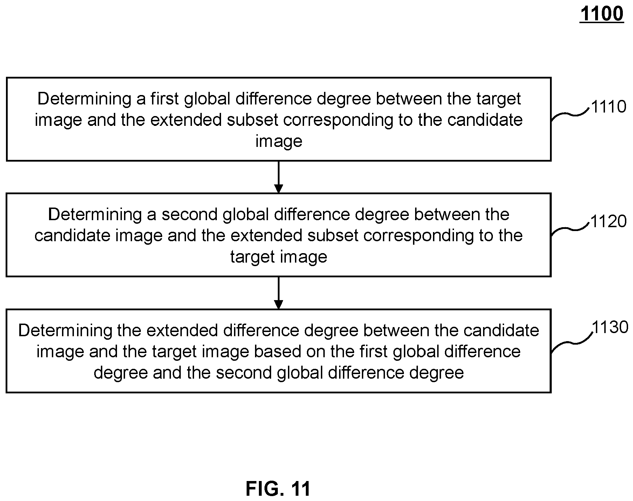

$N(g_i, t)$, $g_iE_j$ refers to a *j-th* image in the $N(g_i, t)$, $d[g_iE_j, q]$ refers to a Hamming distance between the image $g_iE_j$ and the target image $q$, $r_{q,j}$ refers to a ranking position of the image $g_iE_j$ in the extended neighbor image set, and $\dfrac{1}{r_{q,j}}$ refers to the weighting coefficient corresponding to the image $g_iE_j$. More descriptions regarding determining the target image difference degree may be found elsewhere in the present disclosure (e.g., FIG. 11 and the description thereof).

In 570, for each of the plurality of candidate images, a candidate image difference degree (also referred to as "second global difference degree") between the candidate image and the extended neighbor image set corresponding to the target image may be determined. In some embodiments, the candidate image difference degree may be determined by the processing device 112 (e.g., the extended difference degree determination module 630) (e.g., the processing circuits of the processor 220).

In some embodiments, images in the extended neighbor image set corresponding to the target image may be ranked (e.g., from small to large) based on the difference degrees (e.g., the Hamming distance) between the images and the candidate image. For each image in the extended neighbor image set corresponding to the target image, a weighting coefficient corresponding to the image may be determined based on a ranking position of the image. The higher the ranking position of the image is, the larger the weighting coefficient corresponding to the image may be. For example, the weighting coefficient corresponding to the image in the extended neighbor image set corresponding to the target image may a reciprocal of the ranking position of the image. Further, the candidate image difference degree may be determined by weighting a plurality of image difference degrees between the candidate image and the images in the extended neighbor image set corresponding to the target image. For example, the candidate image difference degree may be determined according to formula (6) below:

$$d_2 = \frac{1}{r_{i,j}} d\big(qE_j, g_i\big) \qquad (6)$$

where $d_2$ refers to the candidate image difference degree between a candidate image $g_i$ and the extended neighbor image set $N(q, t)$, $qE_j$ refers to a *j-th* image in the $N(q, t)$, $d(qE_j, g_i)$ refers to a Hamming distance between the image $qE_j$ and the candidate image $g_i$, $r_{i,j}$ refers to a ranking position of the image $qE_j$ in the extended neighbor image set, and $\dfrac{1}{r_{i,j}}$ refers to the weighting $r_{i,j}$ coefficient corresponding to the image $qE_j$. More descriptions regarding determining the candidate image difference degree may be found elsewhere in the present disclosure (e.g., FIG. 11 and the description thereof).

In 580, for each of the plurality of candidate images, a mean value of the target image difference degree and the candidate image difference degree may be determined as an image set difference degree. Further, the image set difference degree may be designated as an extended difference degree between the target image and the candidate image. In some embodiments, the mean value of the target image difference degree and the candidate image difference degree may be determined by the processing device 112 (e.g., the extended difference degree determination module 630) (e.g., the processing circuits of the processor 220).

In some embodiments, the image set difference degree may be determined according to formula (7) below:

$$d_e(q, g_i) = \frac{1}{2t}\sum_{j=1}^{t}(d_1 + d_2) \qquad (7)$$

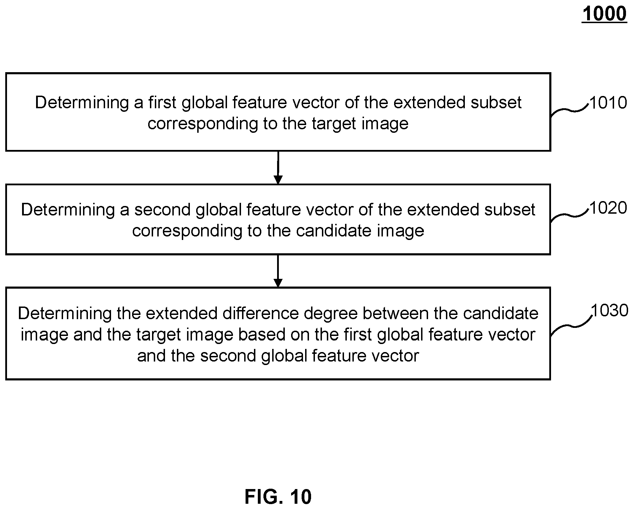

where $d_e(q, g_i)$ refers to the image set difference degree between the candidate image $g_i$ and the target image $q$, $d_1$ refers to the target image difference degree, $d_2$ refers to the candidate image difference degree, and $t = m + m * k$. More descriptions regarding determining the extended difference degree may be found elsewhere in the present disclosure (e.g., FIG. 10, FIG. 11, and the descriptions thereof).

According to some embodiments of the present disclosure, the weighting coefficient corresponding to each image in the extended neighbor image set (e.g., the extended neighbor image set corresponding to the candidate image, the extended neighbor image set corresponding to the target image) is determined based on the ranking position of the image, which may be associated with a correlation degree between two images (e.g., the target image and each image in the extended neighbor image set corresponding to the candidate image, the candidate image and each image in the extended neighbor image set corresponding to the target image), thereby reducing an interference caused by possible factors (e.g., $m$, $k$) and improving a stability of the image retrieval.

In 590, a result image corresponding to the target image may be determined based on a plurality of extended difference degrees corresponding to the plurality of candidate images. In some embodiments, the result image may be determined by the processing device 112 (e.g., an identification module 640 illustrated in FIG. 6) (e.g., the processing circuits of the processor 220).

As described in connection with operation 470, a candidate image with a smallest extended difference degree may be selected from the plurality of candidate images as the result image corresponding to the target image. In some embodiments, after the result image is determined, the result image may be transmitted to a user device (e.g., the user device 140) to be displayed or to be further processed.

According to some embodiments of the present disclosure, the target image difference degree and the candidate image difference degree may be determined by performing a weighting operation, which can reduce the impact of predetermined parameters (e.g., *m, k*), thereby improving a stability and accuracy of image retrieval.

In some embodiments, when the target image and each of the plurality of candidate images include category tags (e.g., "cat," "male"), a retrieval accuracy may be determined based on the category tags. As used herein, a category tag of an image may indicate category information of the image. For example, a category tag of an image with an object "cat" may be "cat;" a category tag of an image with an object "male" may be "male." According to the category tags of the target image and the plurality of candidate images, the retrieval result can be evaluated. For example, if the category tag of the target image is the same as the category tag of the result image, the retrieval accuracy of the retrieval result may be relatively high (e.g., considered as 1); if the category tag of the target image is different from the category tag of the result image, the retrieval accuracy of the retrieval result may be relatively low. In some embodiments, it is assumed that the target image correspond to multiple categories, an average retrieval accuracy may be determined based on multiple individual retrieval accuracies corresponding to the multiple categories.

In some embodiments, after the retrieval accuracy corresponding to a current image retrieval process is determined, a comparison between the current retrieval accuracy (or a current average retrieval accuracy) and a previous retrieval accuracy (or a previous average retrieval accuracy) obtained in a previous image retrieval process may be performed. If the retrieval accuracy is not change (e.g., the current retrieval accuracy is equal to (or substantially equal to) the previous retrieval accuracy), the image retrieval process may be ended and the result image may be transmitted to the user device 140. If the retrieval accuracy is increasing (e.g., the retrieval accuracy is higher than the previous retrieval accuracy), a next image retrieval process may be performed. In some embodiments, the image retrieval process may be iteratively performed until the retrieval accuracy no longer increases. More descriptions regarding iteratively performing an image retrieval process may be found elsewhere in the present disclosure (e.g., FIG. 7 and the description thereof).

It should be noted that the above description is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure.

FIG. 6 is a block diagram illustrating an exemplary processing device according to some embodiments of the present disclosure. The processing device 112 may include a difference degree determination module 610, an extended subset determination module 620, an extended difference degree determination module 630, and an identification module 640.

The difference degree determination module 610 may be configured to determine a plurality of difference degrees associated with an image set including a plurality of candidate images and a target image. In some embodiments, for each image in the image set, the difference degree determination module 610 may determine a feature vector corresponding to the image by using a trained neural network model. Further, the difference degree determination module 610 may determine a difference degree between any two images in the image set based on feature vectors corresponding to the two images. For example, the difference degree determination module 610 may determine the difference degree between any two images in the image set by determining at least one of a Hamming distance, a Euclidean distance, or a cosine distance based on the feature vectors corresponding to the two images.

The extended subset determination module 620 may be configured to determine an extended subset for each image in the image set based on the plurality of difference degrees. In some embodiments, for each image in the image set, the extended subset determination module 620 may rank remainder images in the image set based on the difference degrees between the remainder images and the image and determine a first neighbor subset corresponding to the image based on the ranking result. Further, for each image in the first neighbor subset, the extended subset determination module 620 may rank remainder images in the image set based on the difference degrees between the remainder images and the image and determine a second neighbor subset corresponding to the image based on the ranking result. Then the extended subset determination module 620 may determine the extended subset corresponding to the image based on the first neighbor subset and a plurality of second neighbor subsets corresponding to the images in the first neighbor subset.

The extended difference degree determination module 630 may be configured to, for each of the plurality of candidate images, determine an extended difference degree between the candidate image and the target image based on an extended subset corresponding to the candidate image and an extended subset corresponding to the target image. In some embodiments, the extended difference degree determination module 630 may determine a first global feature vector of the extended neighbor image set corresponding to the target image and a second global feature vector of the extended neighbor image set corresponding to the candidate image. Further, the extended difference degree determination module 630 determine the image set difference degree based on the first global feature vector and the second global feature vector. In some embodiments, the extended difference degree determination module 630 may determine a first global difference degree between the target image and the extended subset corresponding to the candidate image and a second global difference degree between the candidate image and the extended subset corresponding to the target image. Further the extended difference degree determination module 630 may determine the extended difference degree based on the first global difference degree and the second global difference degree.

The identification module 640 may be configured to identify a result image corresponding to the target image from the plurality of candidate images based on the extended difference degrees corresponding to the plurality of candidate images. In some embodiments, the identification module 640 may select a candidate image with a smallest extended difference degree from the plurality of candidate images as the result image corresponding to the target image. In some embodiments, the identification module 640 may identify one or more candidate images with an extended difference degree less than a difference degree threshold (which may be a default setting of the image retrieval system 100 or may be adjustable under different situations) as one or more result images corresponding to the target image.

The modules in the processing device 112 may be connected to or communicate with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth, a ZigBee, a Near Field Communication (NFC), or the like, or any combination thereof. Two or more of the modules may be combined as a single module, and any one of the modules may be divided into two or more units.

For example, the difference degree determination module 610 and the extended subset determination module 620 may be combined as a single module which may both determine the plurality of difference degrees associated with the image set and determine the extended subset for each image in the image set based on the plurality of difference degrees. As another example, the processing device 112 may also include a transmission module configured to transmit signals (e.g., electrical signals, electromagnetic signals) to one or more components (e.g., the user device 140) of the image retrieval 100 to display the result image corresponding to the target image. As further another example, the processing device 112 may include a storage module (not shown) used to store information and/or data (e.g., the image set, the target image, the plurality of candidate images, the result image) associated with the image retrieval.

FIG. 7 is a flowchart illustrating an exemplary process for image retrieval according to some embodiments of the present disclosure. In some embodiments, the process 700 may be implemented as a set of instructions (e.g., an application) stored in the storage ROM 230 or RAM 240. The processor 220 and/or the modules in FIG. 6 may execute the set of instructions, and when executing the instructions, the processor 220 and/or the modules may be configured to perform the process 700. The operations of the illustrated process presented below are intended to be illustrative. In some embodiments, the process 700 may be accomplished with one or more additional operations not described and/or without one or more of the operations herein discussed. Additionally, the order in which the operations of the process as illustrated in FIG. 7 and described below is not intended to be limiting.

In 710, the processing device 112 (e.g., the difference degree determination module 610) (e.g., the processing circuits of the processor 220) may determine a plurality of difference degrees associated with an image set including a plurality of candidate images and a target image.

As described in connection with operation 410, the processing device 112 may obtain the plurality of candidate images from the acquisition device 130, the user device 140, the storage device 150, an external resource, etc. Further, the processing device 112 may specify the image set by integrating the target image and the plurality of candidate images into a set.

In some embodiments, as described in connection with operation 510 and operation 520, for each image in the image set, the processing device 112 may obtain a plurality of features (e.g., category, color, brightness, size) of the image and determine a feature vector corresponding to the image based on the plurality of features by using a trained neural network model (e.g., a convolutional neural network model). Further, the processing device 112 may determine a difference degree between any two images in the image set based on feature vectors corresponding to the two images. More descriptions regarding determining a difference degree between any two images in the image set may be found elsewhere in the present disclosure (e.g., FIG. 8 and the description thereof).

In 720, for each image in the image set, the processing device 112 (e.g., the extended subset determination module 620) (e.g., the processing circuits of the processor 220) may determine an extended subset based on the plurality of difference degrees.

As described in connection with operation 530, operation 540, and/or operation 550, for each image in the image set, the processing device 112 may rank remainder images in the image set based on the difference degrees between the remainder images and the image and determine a first neighbor subset corresponding to the image based on the ranking result. Further, for each image in the first neighbor subset, the processing device 112 may rank remainder images in the image set based on the difference degrees between the remainder images and the image and determine a second neighbor subset corresponding to the image based on the ranking result. Then the processing device 112 may determine the extended subset corresponding to the image based on the first neighbor subset and a plurality of second neighbor subsets corresponding to the images in the first neighbor subset. More descriptions regarding determining the extended subset may be found elsewhere in the present disclosure (e.g., FIG. 9 and the description thereof).

In 730, for each of the plurality of candidate images, the processing device 112 (e.g., the extended difference degree determination module 630) (e.g., the processing circuits of the processor 220) may determine an extended difference degree between the candidate image and the target image based on an extended subset corresponding to the candidate image and an extended subset corresponding to the target image.

As described in connection with operation 450, the processing device 112 may determine a first global feature vector of the extended neighbor image set corresponding to the target image and a second global feature vector of the extended neighbor image set corresponding to the candidate image. Further, the processing device 112 may determine the image set difference degree based on the first global feature vector and the second global feature vector.

As described in connection with operation 560, operation 570, and/or operation 580, the processing device 112 may determine a first global difference degree between the target image and the extended subset corresponding to the candidate image and a second global difference degree between the candidate image and the extended subset corresponding to the target image. Further the processing device 112 may determine the extended difference degree based on the first global difference degree and the second global difference degree. More descriptions of determining the extended difference degree may be found elsewhere in the present disclosure (e.g., FIG. 10, FIG. 11, and the descriptions thereof).

In 740, the processing device 112 (e.g., the identification module 640) (e.g., the processing circuits of the processor 220) may identify a result image corresponding to the target image from the plurality of candidate images based on the extended difference degrees corresponding to the plurality of candidate images.

In some embodiments, as described in connection with operation 460, the processing device 112 may select a candidate image with a smallest extended difference degree from the plurality of candidate images as the result image corresponding to the target image.

In some embodiments, the processing device 112 may identify one or more candidate images with an extended difference degree less than a difference degree threshold (which may be a default setting of the image retrieval system 100 or may be adjustable under different situations) as one or more result images corresponding to the target image.

In some embodiments, after identifying the result image, the processing device 112 may identify a first category (e.g., a category of an object, for example, "male," "female," "cat," "dog," duck") of the target image and a second category of the result image. For example, the processing device 112 may identify the first category and the second category from category tags included in the images. Further, as described in connection with operation 590, the processing device 112 may determine a retrieval accuracy based on the first category and the second category. For example, if the second category is the same as the first category, the processing device 112 may determine the retrieval accuracy as "1;" whereas, if the second category is different from the first category, the processing device 112 may determine the retrieval accuracy as "0."

In some embodiments, the first category of the target image may include multiple specific categories. In this situation, the processing device 112 may determine an individual retrieval accuracy corresponding to each of the multiple specific categories and determine a global retrieval accuracy based on multiple individual retrieval accuracies. For example, it is assumed that the first category includes "cat," "female," and "male," the second category includes "cat" and "male." The processing device 112 may determine an individual retrieval accuracy (which may be "1") corresponding to "cat," an individual retrieval accuracy (which may be "0") corresponding to "female," and an individual retrieval accuracy (which may be "1") corresponding to "male." Further, the processing device 112 may determine the global retrieval accuracy based on an average value (e.g., 2/3) of the multiple individual retrieval accuracies.

In some embodiments, the processing device 112 may determine the retrieval accuracy based on a first feature (e.g., a count of objects, color, brightness, size) of the target image and a second feature of the result image. For example, the processing device 112 may determine the retrieval accuracy based on a comparison result (e.g., a similarity, a consistency) of the first feature and the second feature.

After determining the retrieval accuracy, the processing device 112 may iteratively perform an image retrieval process until the retrieval accuracy satisfies a preset condition. For example, the processing device 112 may determine whether a current retrieval accuracy is equal to (or substantially equal to) a previous retrieval accuracy. In response to determining that the current retrieval accuracy is equal to (or substantially equal to) the previous retrieval accuracy (which indicates that the retrieval accuracy no longer increase), the processing device 112 may end the iterative retrieval process. As another example, the processing device 112 may determine whether the retrieval accuracy is larger than a predetermined threshold. In response to determining that the retrieval accuracy is larger than the predetermined threshold, the processing device 112 may end the iterative retrieval process. The predetermined threshold may be a default setting (e.g., 80%, 90%, 95%, 98%) of the image retrieval system 100 or may be adjustable under different situations.

In some embodiments, the processing device 112 may transmit the finally identified result image to the user device 140 to be displayed or to be further processed.

In the storing operation, the processing device 112 may store information and/or data (e.g., the image set, the target image, the plurality of candidate images, the result image) associated with the image retrieval in a storage device (e.g., the storage device 150) disclosed elsewhere in the present disclosure. As another example, operation 710 and operation 720 may be combined into a single operation in which the processing device 112 may both determine the plurality of difference degrees associated with the image set and determine the extended subset for each image in the image set based on the plurality of difference degrees.

FIG. 8 is a flowchart illustrating an exemplary process for determining a difference degree according to some embodiments of the present disclosure. In some embodiments, the process 800 may be implemented as a set of instructions (e.g., an application) stored in the storage ROM 230 or RAM 240. The processor 220 and/or the modules in FIG. 6 may execute the set of instructions, and when executing the instructions, the processor 220 and/or the modules may be configured to perform the process 800. The operations of the illustrated process presented below are intended to be illustrative. In some embodiments, the process 800 may be accomplished with one or more additional operations not described and/or without one or more of the operations herein discussed. Additionally, the order in which the operations of the process as illustrated in FIG. 8 and described below is not intended to be limiting.

In 810, for each image in the image set, the processing device 112 (e.g., the difference degree determination module 610) (e.g., the processing circuits of the processor 220) may determine a feature vector corresponding to the image by using a trained neural network model (e.g., a trained convolutional neural network).

As described elsewhere in the present disclosure, the neural network model may include a hash coding layer and a binary coding layer. As described in connection with operation 510 and operation 520, for each image in the image set, the processing device 112 may obtain a plurality of features (e.g., category, color, brightness, size) of the image and determine a hash feature vector corresponding to the image by encoding the plurality of features of the image using the hash coding layer. Further, the processing device 112 may determine the feature vector (i.e., a binary hash coding feature vector) corresponding to the image by processing (e.g., compressing, expanding) the hash feature vector using the binary coding layer.

In 820, the processing device 112 (e.g., the difference degree determination module 610) (e.g., the processing circuits of the processor 220) may determine a difference degree between any two images in the image set based on feature vectors corresponding to the two images.

In some embodiments, the processing device 112 may determine the difference degree between any two images in the image set by determining at least one of a Hamming distance, a Euclidean distance, or a cosine distance based on the feature vectors corresponding to the two images. For example, the processing device 112 may designate the Hamming distance between two feature vectors corresponding to any two images in the image set as the difference degree between the two images. As used herein, the Hamming distance between two feature vectors may refer to a count of positions where elements corresponding to the two feature vectors are different. For example, the Hamming distance between a feature vector "(1, **0**, 0, 1, **1**, 0)" and a feature vector "(1, **1**, 0, 1, **0**, 0)" may be 2.

FIG. 9 is a flowchart illustrating an exemplary process for determining an extended subset according to some embodiments of the present disclosure. In some embodiments, the process 900 may be implemented as a set of instructions (e.g., an application) stored in the storage ROM 230 or RAM 240. The processor 220 and/or the modules in FIG. 6 may execute the set of instructions, and when executing the instructions, the processor 220 and/or the modules may be configured to perform the process 900. The operations of the illustrated process presented below are intended to be illustrative. In some embodiments, the process 900 may be accomplished with one or more additional operations not described and/or without one or more of the operations herein discussed. Additionally, the order in which the operations of the process as illustrated in FIG. 9 and described below is not intended to be limiting.

In 910, for each image in the image set, the processing device 112 (e.g., the extended subset determination module 620) (e.g., the processing circuits of the processor 220) may rank remainder images in the image set based on difference degrees (e.g., Hamming distances) between the remainder images and the image.

For example, for the target image, the processing device 112 may rank Hamming distances between the plurality of the candidate images and the target image from small to large. Further, the processing device 112 may rank the plurality of the candidate images based on the ranking result of the Hamming distances.

As another example, for each of the plurality of the candidate images, the processing device 112 may rank Hamming distances between remainder images in the image set and the candidate image from small to large. Further, the processing device 112 may rank the remainder images in the image set based on the ranking result of the Hamming distances.

In 920, for each image in the image set, the processing device 112 (e.g., the extended subset determination module 620) (e.g., the processing circuits of the processor 220) may determine a first neighbor subset including top $N_1$ images based on the ranking result. In some embodiments, $N_1$ may be a default setting (e.g., *m*) of the image retrieval system 100 or may be adjustable under different situations.

In 930, for each image in the first neighbor subset, the processing device 112 (e.g., the extended subset determination module 620) (e.g., the processing circuits of the processor 220) may rank remainder images in the image set based on difference degrees (e.g., Hamming distances) between the remainder images and the image.

For example, for each image (i.e., a candidate image) in a first neighbor subset corresponding to the target image, the processing device 112 may rank Hamming distances between remainder candidate images in the image set and image from small to large. Further, the processing device 112 may rank remainder candidate images in the image set based on the ranking result of the Hamming distances.

As another example, for each image in a first neighbor subset corresponding to a specific candidate image, the processing device 112 may rank Hamming distances between remainder images in the image set and the image from small to large. Further, the processing device 112 may rank the remainder images based on the ranking result of the Hamming distances.

In 940, for each image in the first neighbor subset, the processing device 112 (e.g., the extended subset determination module 620) (e.g., the processing circuits of the processor 220) may determine a second neighbor subset including top $N_2$ images based on the ranking result. In some embodiments, $N_2$ may be a default setting (e.g., *k*) of the image retrieval system 100 or may be adjustable under different situations.

In 950, the processing device 112 (e.g., the extended subset determination module 620) (e.g., the processing circuits of the processor 220) may determine the extended subset for the image in the image set by combining the first neighbor subset and a plurality of second neighbor subsets corresponding to the images in the first neighbor sub-set.

FIG. 10 is a flowchart illustrating an exemplary process for determining an extended difference degree according to some embodiments of the present disclosure. In some embodiments, the process 1000 may be implemented as a set of instructions (e.g., an application) stored in the storage ROM 230 or RAM 240. The processor 220 and/or the modules in FIG. 6 may execute the set of instructions, and when executing the instructions, the processor 220 and/or the modules may be configured to perform the process 1000. The operations of the illustrated process presented below are intended to be illustrative. In some embodiments, the process 1000 may be accomplished with one or more additional operations not described and/or without one or more of the operations herein discussed. Additionally, the order in which the operations of the process as illustrated in FIG. 10 and described below is not intended to be limiting.

In 1010, the processing device 112 (e.g., the extended difference degree determination module 630) (e.g., the processing circuits of the processor 220) may determine a first global feature vector of the extended subset corresponding to the target image.

In some embodiments, as described in connection with operation 510 and operation 810, for each image in the image set, the processing device 112 may determine a feature vector corresponding to the image by using a trained neural network model. The processing device 112 may determine the first global feature vector of the extended subset corresponding to the target image based on feature vectors of images in the extended subset corresponding to the target image. For example, the processing device 112 may determine a sum of the feature vectors of the images in the extended subset corresponding to the target image as the first global feature vector. As another example, except the target image, the processing device 112 may rank (e.g., from small to large) remainder images in the extended subset corresponding to the target image based on difference degrees between the remainder images in the extended subset and the target image. Further, the processing device 112 may determine the first global feature vector by combining the feature vectors of the images in the extended subset corresponding to the target image in an order (e.g., the target image first, the remainder images in order) of the ranking result.

In 1020, for each of the plurality of candidate images, the processing device 112 (e.g., the extended difference degree determination module 630) (e.g., the processing circuits of the processor 220) may determine a second global feature vector of the extended subset corresponding to the candidate image.

As described above, the processing device 112 may determine the second global feature vector of the extended subset corresponding to the candidate image based on feature vectors of the images in the extended subset corresponding to the candidate image in a similar way.

In 1030, for each of the plurality of candidate images, the processing device 112 (e.g., the extended difference degree determination module 630) (e.g., the processing circuits of the processor 220) may determine the extended difference degree between the candidate image and the target image based on the first global feature vector and the second global feature vector.

In some embodiments, the processing device 112 may determine the extended difference degree between the candidate image and the target image by determining at least one of a Hamming distance, a Euclidean distance, or a cosine distance based on the first global feature vector and the second global feature vector.

It should be noted that the above description is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure.

FIG. 11 is a flowchart illustrating an exemplary process for determining an extended difference degree according to some embodiments of the present disclosure. In some embodiments, the process 1100 may be implemented as a set of instructions (e.g., an application) stored in the storage ROM 230 or RAM 240. The processor 220 and/or the modules in FIG. 6 may execute the set of instructions, and when executing the instructions, the processor 220 and/or the modules may be configured to perform the process 1100. The operations of the illustrated process presented below are intended to be illustrative. In some embodiments, the process 1100 may be accomplished with one or more additional operations not described and/or without one or more of the operations herein discussed. Additionally, the order in which the operations of the process as illustrated in FIG. 11 and described below is not intended to be limiting.

In 1110, for each of the plurality of candidate images, the processing device 112 (e.g., the extended difference degree determination module 630) (e.g., the processing circuits of the processor 220) may determine a first global difference degree between the target image and the extended subset corresponding to the candidate image.

In some embodiments, for each image in the extended subset corresponding to the candidate image, the processing device 112 may determine a weighting coefficient corresponding to the image based on a difference degree between the image and the target image. For example, the weighting coefficient corresponding to the image may be negatively correlated with the difference degree between the image and the target image. Further, the processing device 112 may determine the first global difference degree by weighting a plurality of difference degrees between the target image and the images in the extended subset corresponding to the candidate image.

In 1120, for each of the plurality of candidate images, the processing device 112 (e.g., the extended difference degree determination module 630) (e.g., the processing circuits of the processor 220) may determine a second global difference degree between the candidate image and the extended subset corresponding to the target image.

In some embodiments, for each image in the extended subset corresponding to the target image, the processing device 112 may determine a weighting coefficient corresponding to the image based on a difference degree between the image and the candidate image. For example, the weighting coefficient corresponding to the image may be negatively correlated with the difference degree between the image and the candidate image. Further, the processing device 112 may determine the second global difference degree between the candidate image and the extended subset corresponding to the target image by weighting a plurality of difference degrees between the candidate image and images in the extended subset corresponding to the target image.

In 1130, for each of the plurality of candidate images, the processing device 112 (e.g., the extended difference degree determination module 630) (e.g., the processing circuits of the processor 220) may determine the extended difference degree between the candidate image and the target image based on the first global difference degree and the second global difference degree.

For example, the processing device 112 may determine a mean value (or a weighted mean value) of the first global difference degree and the second global difference degree as the extended difference degree between the target image and the candidate image. As another example, the processing device 112 may determine any mathematical result associated with the first global difference degree and the second global difference degree as the extended difference degree between the target image and the candidate image.

The present disclosure may also provide a computer storage medium storing a computer program thereon. When executing by a processor, the computer program may direct the processor to perform a process (e.g., process 400, process 500, process 700, process 800, process 900, process 1000, process 1100) described elsewhere in the present disclosure.

In some embodiments, the computer storage medium may include a U disk, a mobile hard disk, a read-only memory, a random access memory, a magnetic disk, an optical disk, a server that stores the computer program, or the like, or any combination thereof. In some embodiments, the server may execute the computer program or transmit the computer program to other devices for executing. In some embodiments, the computer storage medium may be a combination of a plurality of physical entities, such as a plurality of servers, a server and a storage, or a storage and a mobile hard disk.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer readable media having computer-readable program code embodied thereon.

A computer readable signal medium may include a propagated data signal with computer readable program code embodied therein, for example, in baseband or as part of a carrier wave. Such a propagated signal may take any of a variety of forms, including electromagnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in a combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 2003, Perl, COBOL 2002, PHP, ABAP, dynamic programming languages such as Python, Ruby, and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

## Claims

1. A method implemented on a computing device including at least one processor (220), at least one storage medium (230, 240, 270), and a communication platform connected to a network (120), the method comprising:

   determining a plurality of difference degrees associated with an image set including a plurality of candidate images and a target image, each of the plurality of difference degrees indicating a similarity between two images in the image set;
   for each image in the image set, determining an extended subset for the image based on the plurality of difference degrees by:

   ranking remainder images in the image set based on difference degrees between the remainder images and the image;
   determining a first neighbor subset including top $N_1$ images based on the ranking result;
   for each image in the first neighbor subset,

   ranking remainder images in the image set based on difference degrees between the remainder images and the image; and
   determining a second neighbor subset including top $N_2$ images based on the ranking result; and

   determining the extended subset for the image in the image set by combining the first neighbor subset and a plurality of second neighbor subsets corresponding to the images in the first neighbor sub-set;

for each of the plurality of candidate images, determining an extended difference degree between the candidate image and the target image based on an extended subset corresponding to the candidate image and an extended subset corresponding to the target image by:

determining a first global difference degree between the target image and the extended subset corresponding to the candidate image by weighting a plurality of difference degrees between the target image and images in the extended subset corresponding to the candidate image;

determining a second global difference degree between the candidate image and the extended subset corresponding to the target image by weighting a plurality of difference degrees between the candidate image and images in the extended subset corresponding to the target image; and

determining the extended difference degree between the candidate image and the target image based on the first global difference degree and the second global difference degree; and

identifying a result image with a smallest extended difference degree from the plurality of candidate images based on the extended difference degrees corresponding to the plurality of candidate images.

2. The method of claim 1, wherein the determining the plurality of difference degrees associated with the image set including the plurality of candidate images and the target image includes:

for each image in the image set, determining a feature vector corresponding to the image by using a trained neural network model; and
determining a difference degree between any two images in the image set based on feature vectors corresponding to the two images.

3. The method of claim 2, wherein

the neural network model includes a hash coding layer and a binary coding layer, and
the feature vector is a binary hash coding feature vector.

4. The method of claim 2, wherein the determining the difference degree between any two images in the image set based on the feature vectors corresponding to the two images includes:
determining the difference degree between any two images in the image set by determining at least one of a Hamming distance, a Euclidean distance, or a cosine distance based on the feature vectors corresponding to the two images.

5. The method of any of claims 1, wherein for each of the plurality of candidate images, the determining the extended difference degree between the candidate image and the target image based on the extended subset corresponding to the candidate image and the extended subset corresponding to the target image includes:

determining a first global feature vector of the extended subset corresponding to the target image;
determining a second global feature vector of the extended subset corresponding to the candidate image; and
determining the extended difference degree between the candidate image and the target image based on the first global feature vector and the second global feature vector.

6. The method of claim 1, wherein

for each of the images in the extended subset corresponding to the candidate image, a weighting coefficient corresponding to the image is negatively correlated with a difference degree between the image and the target image; and
for each of the images in the extended subset corresponding to the target image, a weighting coefficient corresponding to the image is negatively correlated with a difference degree between the image and the candidate image.

7. The method of any of claims 1, wherein the method further includes:

identifying a first category of the target image and a second category of the result image;
determining a retrieval accuracy based on the first category and the second category; and
iteratively performing an image retrieval process until the retrieval accuracy satisfies a preset condition.

**8.** A system for image retrieval, comprising:

a difference degree determination module (610) configured to determine a plurality of difference degrees associated with an image set including a plurality of candidate images and a target image, each of the plurality of difference degrees indicating a similarity between two images in the image set;

an extended subset determination module (620) configured to determine an extended subset for each image in the image set based on the plurality of difference degrees, wherein to determine the extended subset for each image in the image set based on the plurality of difference degrees, the extended subset determination module (620) is further configured to:

rank remainder images in the image set based on difference degrees between the remainder images and the image;

determine a first neighbor subset including top $N_1$ images based on the ranking result;

for each image in the first neighbor subset,

rank remainder images in the image set based on difference degrees between the remainder images and the image; and

determine a second neighbor subset including top $N_2$ images based on the ranking result; and

determine the extended subset for the image in the image set by combining the first neighbor subset and a plurality of second neighbor subsets corresponding to the images in the first neighbor sub-set;

an extended difference degree determination module (630) configured to determine an extended difference degree between each of the plurality of candidate images and the target image based on an extended subset corresponding to the candidate image and an extended subset corresponding to the target image, wherein to determine an extended difference degree between each of the plurality of candidate images and the target image based on an extended subset corresponding to the candidate image and an extended subset corresponding to the target image, the extended difference degree determination module (630) is further configured to:

determine a first global difference degree between the target image and the extended subset corresponding to the candidate image by weighting a plurality of difference degrees between the target image and images in the extended subset corresponding to the candidate image;

determine a second global difference degree between the candidate image and the extended subset corresponding to the target image by weighting a plurality of difference degrees between the candidate image and images in the extended subset corresponding to the target image; and

determine the extended difference degree between the candidate image and the target image based on the first global difference degree and the second global difference degree; and

an identification module (640) configured to identify a result image with a smallest extended difference degree from the plurality of candidate images based on the extended difference degrees corresponding to the plurality of candidate images.

**9.** The system of claim 8, wherein to determine the plurality of difference degrees associated with the image set including the plurality of candidate images and the target image, the difference degree determination module (610) is further configured to:

for each image in the image set, determine a feature vector corresponding to the image by using a trained neural network model; and

determine a difference degree between any two images in the image set based on feature vectors corresponding to the two images.

**10.** The system of claim 8, wherein to determine the extended difference degree between each of the plurality of candidate images and the target image based on the extended subset corresponding to the candidate image and the extended subset corresponding to the target image, the extended difference degree determination module (630) is further configured to:

determine a first global feature vector of the extended subset corresponding to the target image;

determine a second global feature vector of the extended subset corresponding to the candidate image; and

determine the extended difference degree between the candidate image and the target image based on the first global feature vector and the second global feature vector.

**11.** A non-transitory computer readable medium, comprising executable instructions that, when executed by at least one processor (220), direct the at least one processor (220) to perform a method, the method comprising:

determining a plurality of difference degrees associated with an image set including a plurality of candidate images and a target image, each of the plurality of difference degrees indicating a similarity between two images in the image set;

for each image in the image set, determining an extended subset for the image based on the plurality of difference degrees by:

ranking remainder images in the image set based on difference degrees between the remainder images and the image;

determining a first neighbor subset including top $N_1$ images based on the ranking result;

for each image in the first neighbor subset,

ranking remainder images in the image set based on difference degrees between the remainder images and the image; and

determining a second neighbor subset including top $N_2$ images based on the ranking result; and

determining the extended subset for the image in the image set by combining the first neighbor subset and a plurality of second neighbor subsets corresponding to the images in the first neighbor sub-set;

for each of the plurality of candidate images, determining an extended difference degree between the candidate image and the target image based on an extended subset corresponding to the candidate image and an extended subset corresponding to the target image by:

determining a first global difference degree between the target image and the extended subset corresponding to the candidate image by weighting a plurality of difference degrees between the target image and images in the extended subset corresponding to the candidate image;

determining a second global difference degree between the candidate image and the extended subset corresponding to the target image by weighting a plurality of difference degrees between the candidate image and images in the extended subset corresponding to the target image; and

determining the extended difference degree between the candidate image and the target image based on the first global difference degree and the second global difference degree; and

identifying a result image with a smallest extended difference degree from the plurality of candidate images based on the extended difference degrees corresponding to the plurality of candidate images.

**Patentansprüche**

**1.** Verfahren, das auf einer Rechenvorrichtung implementiert wird, die mindestens einen Prozessor (220), mindestens ein Speichermedium (230, 240, 270) und eine mit einem Netzwerk (120) verbundene Kommunikationsplattform beinhaltet, wobei das Verfahren umfasst:

Bestimmen einer Vielzahl von Differenzgraden, die einem Bildsatz zugeordnet sind, der eine Vielzahl von Kandidatenbildern und ein Zielbild beinhaltet, wobei jeder der Vielzahl von Differenzgraden eine Ähnlichkeit zwischen zwei Bildern im Bildsatz angibt;

Bestimmen, für jedes Bild im Bildsatz, eines erweiterten Teilsatzes für das Bild auf Basis der Vielzahl von Differenzgraden durch:

Einstufen von verbleibenden Bildern im Bildsatz auf Basis von Differenzgraden zwischen den verbleibenden Bildern und dem Bild;

Bestimmen eines ersten Nachbarteilsatzes, der die besten $N_1$ Bilder beinhaltet, auf Basis des Einstufungsergebnisses;

für jedes Bild im ersten Nachbarteilsatz,

Einstufen von verbleibenden Bildern im Bildsatz auf Basis von Differenzgraden zwischen den verbleibenden Bildern und dem Bild; und
Bestimmen eines zweiten Nachbarteilsatzes, der die besten $N_2$ Bilder beinhaltet, auf Basis des Einstufungsergebnisses; und

Bestimmen des erweiterten Teilsatzes für das Bild im Bildsatz durch Kombinieren des ersten Nachbarteilsatzes und einer Vielzahl von zweiten Nachbarteilsätzen, die den Bildern im ersten Nachbarteilsatz entsprechen;

Bestimmen, für jedes der Vielzahl von Kandidatenbildern, eines erweiterten Differenzgrades zwischen dem Kandidatenbild und dem Zielbild auf Basis eines erweiterten Teilsatzes, der dem Kandidatenbild entspricht, und eines erweiterten Teilsatzes, der dem Zielbild entspricht, durch:

Bestimmen eines ersten globalen Differenzgrades zwischen dem Zielbild und dem erweiterten Teilsatz, der dem Kandidatenbild entspricht, durch Gewichten einer Vielzahl von Differenzgraden zwischen dem Zielbild und Bildern in dem erweiterten Teilsatz, der dem Kandidatenbild entspricht;
Bestimmen eines zweiten globalen Differenzgrades zwischen dem Kandidatenbild und dem erweiterten Teilsatz, der dem Zielbild entspricht, durch Gewichten einer Vielzahl von Differenzgraden zwischen dem Kandidatenbild und Bildern in dem erweiterten Teilsatz, der dem Zielbild entspricht; und
Bestimmen des erweiterten Differenzgrades zwischen dem Kandidatenbild und dem Zielbild auf Basis des ersten globalen Differenzgrades und des zweiten globalen Differenzgrades; und

Identifizieren eines Ergebnisbildes mit einem kleinsten erweiterten Differenzgrad aus der Vielzahl von Kandidatenbildern auf Basis der erweiterten Differenzgrade, die der Vielzahl von Kandidatenbildern entsprechen.

2. Verfahren nach Anspruch 1, wobei das Bestimmen der Vielzahl von Differenzgraden, die dem Bildsatz, der die Vielzahl von Kandidatenbildern und das Zielbild beinhaltet, zugeordnet sind, beinhaltet:

Bestimmen, für jedes Bild im Bildsatz, eines dem Bild entsprechenden Merkmalsvektors unter Verwendung eines trainierten neuronalen Netzwerkmodells; und
Bestimmen eines Differenzgrades zwischen zwei beliebigen Bildern im Bildsatz auf Basis von Merkmalsvektoren, die den zwei Bildern entsprechen.

3. Verfahren nach Anspruch 2, wobei

das neuronale Netzwerkmodell eine Hash-Codierungsschicht und eine binäre Codierungsschicht beinhaltet, und der Merkmalsvektor ein binärer Hash-Codierungsmerkmalsvektor ist.

4. Verfahren nach Anspruch 2, wobei das Bestimmen des Differenzgrades zwischen zwei beliebigen Bildern im Bildsatz auf Basis der Merkmalsvektoren, die den zwei Bildern entsprechen, beinhaltet:
Bestimmen des Differenzgrades zwischen zwei beliebigen Bildern im Bildsatz durch Bestimmen mindestens einer von einer Hamming-Distanz, einer euklidischen Distanz oder einer Kosinus-Distanz auf Basis der Merkmalsvektoren, die den zwei Bildern entsprechen.

5. Verfahren nach einem der Ansprüche 1, wobei für jedes der Vielzahl von Kandidatenbildern das Bestimmen des erweiterten Differenzgrades zwischen dem Kandidatenbild und dem Zielbild auf Basis des erweiterten Teilsatzes, der dem Kandidatenbild entspricht, und des erweiterten Teilsatzes, der dem Zielbild entspricht, beinhaltet:

Bestimmen eines ersten globalen Merkmalsvektors des erweiterten Teilsatzes, der dem Zielbild entspricht;
Bestimmen eines zweiten globalen Merkmalsvektors des erweiterten Teilsatzes, der dem Kandidatenbild entspricht; und
Bestimmen des erweiterten Differenzgrades zwischen dem Kandidatenbild und dem Zielbild auf Basis des ersten globalen Merkmalsvektors und des zweiten globalen Merkmalsvektors.

6. Verfahren nach Anspruch 1, wobei

für jedes der Bilder in dem erweiterten Teilsatz, der dem Kandidatenbild entspricht, ein Gewichtungskoeffizient, der dem Bild entspricht, negativ mit einem Differenzgrad zwischen dem Bild und dem Zielbild korreliert; und

für jedes der Bilder in dem erweiterten Teilsatz, der dem Zielbild entspricht, ein Gewichtungskoeffizient, der dem Bild entspricht, negativ mit einem Differenzgrad zwischen dem Bild und dem Kandidatenbild korreliert.

7. Verfahren nach einem der Ansprüche 1, wobei das Verfahren weiter beinhaltet:

Identifizieren einer ersten Kategorie des Zielbildes und einer zweiten Kategorie des Ergebnisbildes;
Bestimmen einer Abrufgenauigkeit auf Basis der ersten Kategorie und der zweiten Kategorie; und
iteratives Durchführen eines Bildabrufprozesses, bis die Abrufgenauigkeit eine voreingestellte Bedingung erfüllt.

8. System zum Abrufen von Bildern, umfassend:

ein Differenzgradbestimmungsmodul (610), das so konfiguriert ist, dass es eine Vielzahl von Differenzgraden bestimmt, die einem Bildsatz zugeordnet sind, der eine Vielzahl von Kandidatenbildern und ein Zielbild beinhaltet, wobei jeder der Vielzahl von Differenzgraden eine Ähnlichkeit zwischen zwei Bildern im Bildsatz angibt;
ein Modul zum Bestimmen eines erweiterten Teilsatzes (620), das so konfiguriert ist, dass es einen erweiterten Teilsatz für jedes Bild im Bildsatz auf Basis der Vielzahl von Differenzgraden bestimmt, wobei, um den erweiterten Teilsatz für jedes Bild im Bildsatz auf Basis der Vielzahl von Differenzgraden zu bestimmen, das Modul zum Bestimmen eines erweiterten Teilsatzes (620) weiter so konfiguriert ist, dass es:

verbleibende Bilder im Bildsatz auf Basis von Differenzgraden zwischen den verbleibenden Bildern und dem Bild einstuft;
einen ersten Nachbarteilsatz, der die besten $N_1$ Bilder beinhaltet, auf Basis des Einstufungsergebnisses bestimmt;
für jedes Bild im ersten Nachbarteilsatz,

verbleibende Bilder im Bildsatz auf Basis von Differenzgraden zwischen den verbleibenden Bildern und dem Bild einstuft; und
einen zweiten Nachbarteilsatz, der die besten $N_2$ Bilder beinhaltet, auf Basis des Einstufungsergebnisses bestimmt; und

den erweiterten Teilsatz für das Bild im Bildsatz durch Kombinieren des ersten Nachbarteilsatzes und einer Vielzahl von zweiten Nachbarteilsätzen, die den Bildern im ersten Nachbarteilsatz entsprechen, bestimmt;

ein Modul zum Bestimmen eines erweiterten Differenzgrades (630), das so konfiguriert ist, dass es einen erweiterten Differenzgrad zwischen jedem der Vielzahl von Kandidatenbildern und dem Zielbild auf Basis eines erweiterten Teilsatzes, der dem Kandidatenbild entspricht, und eines erweiterten Teilsatzes, der dem Zielbild entspricht, bestimmt, wobei, um einen erweiterten Differenzgrad zwischen jedem der Vielzahl von Kandidatenbildern und dem Zielbild auf Basis eines erweiterten Teilsatzes, der dem Kandidatenbild entspricht, und eines erweiterten Teilsatzes, der dem Zielbild entspricht, zu bestimmen, das Modul zum Bestimmen eines erweiterten Differenzgrades (630) weiter so konfiguriert ist, dass es:

einen ersten globalen Differenzgrad zwischen dem Zielbild und dem erweiterten Teilsatz, der dem Kandidatenbild entspricht, durch Gewichten einer Vielzahl von Differenzgraden zwischen dem Zielbild und Bildern in dem erweiterten Teilsatz, der dem Kandidatenbild entspricht, bestimmt;
einen zweiten globalen Differenzgrad zwischen dem Kandidatenbild und dem erweiterten Teilsatz, der dem Zielbild entspricht, durch Gewichten einer Vielzahl von Differenzgraden zwischen dem Kandidatenbild und Bildern in dem erweiterten Teilsatz, der dem Zielbild entspricht, bestimmt; und
den erweiterten Differenzgrad zwischen dem Kandidatenbild und dem Zielbild auf Basis des ersten globalen Differenzgrades und des zweiten globalen Differenzgrades bestimmt; und

ein Identifizierungsmodul (640), das so konfiguriert ist, dass es ein Ergebnisbild mit einem kleinsten erweiterten Differenzgrad aus der Vielzahl von Kandidatenbildern auf Basis der erweiterten Differenzgrade, die der Vielzahl von Kandidatenbildern entsprechen, identifiziert.

9. System nach Anspruch 8, wobei, um die Vielzahl von Differenzgraden, die dem Bildsatz, der die Vielzahl von Kandidatenbildern und das Zielbild beinhaltet, zugeordnet sind, zu bestimmen, das Differenzgradbestimmungsmodul (610) weiter so konfiguriert ist, dass es:

für jedes Bild im Bildsatz einen dem Bild entsprechenden Merkmalsvektor unter Verwendung eines trainierten neuronalen Netzwerkmodells bestimmt; und

einen Differenzgrad zwischen zwei beliebigen Bildern im Bildsatz auf Basis von Merkmalsvektoren, die den zwei Bildern entsprechen, bestimmt.

10. System nach Anspruch 8, wobei, um den erweiterten Differenzgrad zwischen jedem der Vielzahl von Kandidatenbildern und dem Zielbild auf Basis des erweiterten Teilsatzes, der dem Kandidatenbild entspricht, und des erweiterten Teilsatzes, der dem Zielbild entspricht, zu bestimmen, das Modul zum Bestimmen eines erweiterten Differenzgrades (630) weiter so konfiguriert ist, dass es:

einen ersten globalen Merkmalsvektor des erweiterten Teilsatzes, der dem Zielbild entspricht, bestimmt;

einen zweiten globalen Merkmalsvektor des erweiterten Teilsatzes, der dem Kandidatenbild entspricht, bestimmt; und

den erweiterten Differenzgrad zwischen dem Kandidatenbild und dem Zielbild auf Basis des ersten globalen Merkmalsvektors und des zweiten globalen Merkmalsvektors bestimmt.

11. Nichtflüchtiges computerlesbares Medium, das ausführbare Anweisungen umfasst, die, wenn sie von mindestens einem Prozessor (220) ausgeführt werden, den mindestens einen Prozessor (220) anweisen, ein Verfahren durchzuführen, wobei das Verfahren umfasst:

Bestimmen einer Vielzahl von Differenzgraden, die einem Bildsatz zugeordnet sind, der eine Vielzahl von Kandidatenbildern und ein Zielbild beinhaltet, wobei jeder der Vielzahl von Differenzgraden eine Ähnlichkeit zwischen zwei Bildern im Bildsatz angibt;

Bestimmen, für jedes Bild im Bildsatz, eines erweiterten Teilsatzes für das Bild auf Basis der Vielzahl von Differenzgraden durch:

Einstufen von verbleibenden Bildern im Bildsatz auf Basis von Differenzgraden zwischen den verbleibenden Bildern und dem Bild;

Bestimmen eines ersten Nachbarteilsatzes, der die besten $N_1$ Bilder beinhaltet, auf Basis des Einstufungsergebnisses;

für jedes Bild im ersten Nachbarteilsatz,

Einstufen von verbleibenden Bildern im Bildsatz auf Basis von Differenzgraden zwischen den verbleibenden Bildern und dem Bild; und

Bestimmen eines zweiten Nachbarteilsatzes, der die besten $N_2$ Bilder beinhaltet, auf Basis des Einstufungsergebnisses; und

Bestimmen des erweiterten Teilsatzes für das Bild im Bildsatz durch Kombinieren des ersten Nachbarteilsatzes und einer Vielzahl von zweiten Nachbarteilsätzen, die den Bildern im ersten Nachbarteilsatz entsprechen;

Bestimmen, für jedes der Vielzahl von Kandidatenbildern, eines erweiterten Differenzgrades zwischen dem Kandidatenbild und dem Zielbild auf Basis eines erweiterten Teilsatzes, der dem Kandidatenbild entspricht, und eines erweiterten Teilsatzes, der dem Zielbild entspricht, durch:

Bestimmen eines ersten globalen Differenzgrades zwischen dem Zielbild und dem erweiterten Teilsatz, der dem Kandidatenbild entspricht, durch Gewichten einer Vielzahl von Differenzgraden zwischen dem Zielbild und Bildern in dem erweiterten Teilsatz, der dem Kandidatenbild entspricht;

Bestimmen eines zweiten globalen Differenzgrades zwischen dem Kandidatenbild und dem erweiterten Teilsatz, der dem Zielbild entspricht, durch Gewichten einer Vielzahl von Differenzgraden zwischen dem Kandidatenbild und Bildern in dem erweiterten Teilsatz, der dem Zielbild entspricht; und

Bestimmen des erweiterten Differenzgrades zwischen dem Kandidatenbild und dem Zielbild auf Basis des ersten globalen Differenzgrades und des zweiten globalen Differenzgrades; und

Identifizieren eines Ergebnisbildes mit einem kleinsten erweiterten Differenzgrad aus der Vielzahl von Kandidatenbildern auf Basis der erweiterten Differenzgrade, die der Vielzahl von Kandidatenbildern entsprechen.

**Revendications**

1. Procédé mis en oeuvre sur un dispositif informatique incluant au moins un processeur (220), au moins un support de stockage (230, 240, 270) et une plate-forme de communication connectée à un réseau (120), le procédé comprenant :

   la détermination d'une pluralité de degrés de différence associée à un ensemble d'images incluant une pluralité d'images candidates et une image cible, chacun de la pluralité de degrés de différence indiquant une similarité entre deux images dans l'ensemble d'images ;
   pour chaque image dans l'ensemble d'images, la détermination d'un sous-ensemble étendu pour l'image sur la base de la pluralité de degrés de différence par :

   le classement d'images restantes dans l'ensemble d'images sur la base de degrés de différence entre les images restantes et l'image ;
   la détermination d'un premier sous-ensemble voisin incluant $N_1$ meilleures images sur la base du résultat de classement ;
   pour chaque image dans le premier sous-ensemble voisin,

   le classement d'images restantes dans l'ensemble d'images sur la base de degrés de différence entre les images restantes et l'image ; et
   la détermination d'un second sous-ensemble voisin incluant $N_2$ meilleures images sur la base du résultat de classement ; et

   la détermination du sous-ensemble étendu pour l'image dans l'ensemble d'images en combinant le premier sous-ensemble voisin et une pluralité de seconds sous-ensembles voisins correspondant aux images dans le premier sous-ensemble voisin ;

   pour chacune de la pluralité d'images candidates, la détermination d'un degré de différence étendu entre l'image candidate et l'image cible sur la base d'un sous-ensemble étendu correspondant à l'image candidate et d'un sous-ensemble étendu correspondant à l'image cible par :

   la détermination d'un premier degré de différence globale entre l'image cible et le sous-ensemble étendu correspondant à l'image candidate en pondérant une pluralité de degrés de différence entre l'image cible et les images dans le sous-ensemble étendu correspondant à l'image candidate ;
   la détermination d'un second degré de différence globale entre l'image candidate et le sous-ensemble étendu correspondant à l'image cible en pondérant une pluralité de degrés de différence entre l'image candidate et les images dans le sous-ensemble étendu correspondant à l'image cible ; et
   la détermination du degré de différence étendu entre l'image candidate et l'image cible sur la base du premier degré de différence globale et du second degré de différence globale ; et

   l'identification d'une image de résultat avec un plus petit degré de différence étendu parmi la pluralité d'images candidates sur la base des degrés de différence étendus correspondant à la pluralité d'images candidates.

2. Procédé selon la revendication 1, dans lequel la détermination de la pluralité de degrés de différence associée à l'ensemble d'images incluant la pluralité d'images candidates et l'image cible inclut :

   pour chaque image dans l'ensemble d'images, la détermination d'un vecteur de caractéristiques correspondant à l'image à l'aide d'un modèle de réseau neuronal entraîné ; et
   la détermination d'un degré de différence entre deux images quelconques dans l'ensemble d'images sur la base de vecteurs de caractéristiques correspondant aux deux images.

3. Procédé selon la revendication 2, dans lequel

   le modèle de réseau neuronal inclut une couche de codage par hachage et une couche de codage binaire, et
   le vecteur de caractéristiques est un vecteur de caractéristiques de codage par hachage binaire.

4. Procédé selon la revendication 2, dans lequel la détermination du degré de différence entre deux images quelconques dans l'ensemble d'images sur la base des vecteurs de caractéristiques correspondant aux deux images inclut :

**EP 3 921 744 B1**

la détermination du degré de différence entre deux images quelconques dans l'ensemble d'images en déterminant au moins l'une d'une distance de Hamming, d'une distance euclidienne ou d'une distance cosinusoïdale sur la base des vecteurs de caractéristiques correspondant aux deux images.

5. Procédé selon l'une quelconque des revendications 1, dans lequel pour chacune de la pluralité d'images candidates, la détermination du degré de différence étendu entre l'image candidate et l'image cible sur la base du sous-ensemble étendu correspondant à l'image candidate et du sous-ensemble étendu correspondant à l'image cible inclut :

la détermination d'un premier vecteur de caractéristiques globales du sous-ensemble étendu correspondant à l'image cible ;
la détermination d'un second vecteur de caractéristiques globales du sous-ensemble étendu correspondant à l'image candidate ; et
la détermination du degré de différence étendu entre l'image candidate et l'image cible sur la base du premier vecteur de caractéristiques globales et du second vecteur de caractéristiques globales.

6. Procédé selon la revendication 1, dans lequel

pour chacune des images dans le sous-ensemble étendu correspondant à l'image candidate, un coefficient de pondération correspondant à l'image est négativement corrélé à un degré de différence entre l'image et l'image cible ; et
pour chacune des images dans le sous-ensemble étendu correspondant à l'image cible, un coefficient de pondération correspondant à l'image est négativement corrélé à un degré de différence entre l'image et l'image candidate.

7. Procédé selon l'une quelconque des revendications 1, dans lequel le procédé inclut en outre :

l'identification d'une première catégorie de l'image cible et d'une seconde catégorie de l'image résultat ;
la détermination d'une précision de récupération sur la base de la première catégorie et de la seconde catégorie ; et
la réalisation itérative d'un processus de récupération d'images jusqu'à ce que la précision de récupération satisfasse à une condition prédéfinie.

8. Système de récupération d'images, comprenant :

un module de détermination de degré de différence (610) configuré pour déterminer une pluralité de degrés de différence associée à un ensemble d'images incluant une pluralité d'images candidates et une image cible, chacun de la pluralité de degrés de différence indiquant une similarité entre deux images dans l'ensemble d'images ;
un module de détermination de sous-ensemble étendu (620) configuré pour déterminer un sous-ensemble étendu pour chaque image dans l'ensemble d'images sur la base de la pluralité de degrés de différence, dans lequel pour déterminer le sous-ensemble étendu pour chaque image dans l'ensemble d'images sur la base de la pluralité de degrés de différence, le module de détermination de sous-ensemble étendu (620) est en outre configuré pour :

classer des images restantes dans l'ensemble d'images sur la base de degrés de différence entre les images restantes et l'image ;
déterminer un premier sous-ensemble voisin incluant $N_1$ meilleures images sur la base du résultat de classement ;
pour chaque image dans le premier sous-ensemble voisin,

classer des images restantes dans l'ensemble d'images sur la base de degrés de différence entre les images restantes et l'image ; et
déterminer un second sous-ensemble voisin incluant $N_2$ meilleures images sur la base du résultat de classement ; et

déterminer le sous-ensemble étendu pour l'image dans l'ensemble d'images en combinant le premier sous-ensemble voisin et une pluralité de seconds sous-ensembles voisins correspondant aux images dans le premier sous-ensemble voisin ;

25

un module de détermination de degré de différence étendu (630) configuré pour déterminer un degré de différence étendu entre chacune de la pluralité d'images candidates et l'image cible sur la base d'un sous-ensemble étendu correspondant à l'image candidate et d'un sous-ensemble étendu correspondant à l'image cible, dans lequel pour déterminer un degré de différence étendu entre chacune de la pluralité d'images candidates et l'image cible sur la base d'un sous-ensemble étendu correspondant à l'image candidate et d'un sous-ensemble étendu correspondant à l'image cible, le module de détermination de degré de différence étendu (630) est en outre configuré pour :

déterminer un premier degré de différence globale entre l'image cible et le sous-ensemble étendu correspondant à l'image candidate en pondérant une pluralité de degrés de différence entre l'image cible et les images dans le sous-ensemble étendu correspondant à l'image candidate ;

déterminer un second degré de différence globale entre l'image candidate et le sous-ensemble étendu correspondant à l'image cible en pondérant une pluralité de degrés de différence entre l'image candidate et les images dans le sous-ensemble étendu correspondant à l'image cible ; et

déterminer le degré de différence étendu entre l'image candidate et l'image cible sur la base du premier degré de différence globale et du second degré de différence globale ; et

un module d'identification (640) configuré pour identifier une image de résultat avec un plus petit degré de différence étendu parmi la pluralité d'images candidates sur la base des degrés de différence étendus correspondant à la pluralité d'images candidates.

9. Système selon la revendication 8, dans lequel pour déterminer la pluralité de degrés de différence associée à l'ensemble d'images incluant la pluralité d'images candidates et l'image cible, le module de détermination de degrés de différence (610) est en outre configuré pour :

pour chaque image dans l'ensemble d'images, déterminer un vecteur de caractéristiques correspondant à l'image à l'aide d'un modèle de réseau neuronal entraîné ; et

déterminer un degré de différence entre deux images quelconques dans l'ensemble d'images sur la base de vecteurs de caractéristiques correspondant aux deux images.

10. Système selon la revendication 8, dans lequel pour déterminer le degré de différence étendu entre chacune de la pluralité d'images candidates et l'image cible sur la base du sous-ensemble étendu correspondant à l'image candidate et du sous-ensemble étendu correspondant à l'image cible, le module de détermination de degré de différence étendu (630) est en outre configuré pour :

déterminer un premier vecteur de caractéristiques globales du sous-ensemble étendu correspondant à l'image cible ;

déterminer un second vecteur de caractéristiques globales du sous-ensemble étendu correspondant à l'image candidate ; et

déterminer le degré de différence étendu entre l'image candidate et l'image cible sur la base du premier vecteur de caractéristiques globales et du second vecteur de caractéristiques globales.

11. Support non transitoire lisible par ordinateur, comprenant des instructions exécutables qui, lorsqu'elles sont exécutées par au moins un processeur (220), ordonnent au au moins un processeur (220) d'effectuer un procédé, le procédé comprenant :

la détermination d'une pluralité de degrés de différence associée à un ensemble d'images incluant une pluralité d'images candidates et une image cible, chacun de la pluralité de degrés de différence indiquant une similarité entre deux images dans l'ensemble d'images ;

pour chaque image dans l'ensemble d'images, la détermination d'un sous-ensemble étendu pour l'image sur la base de la pluralité de degrés de différence par :

le classement d'images restantes dans l'ensemble d'images sur la base de degrés de différence entre les images restantes et l'image ;

la détermination d'un premier sous-ensemble voisin incluant $N_1$ meilleures images sur la base du résultat de classement ;

pour chaque image dans le premier sous-ensemble voisin,

le classement d'images restantes dans l'ensemble d'images sur la base de degrés de différence entre les images restantes et l'image ; et

la détermination d'un second sous-ensemble voisin incluant $N_2$ meilleures images sur la base du résultat de classement ; et

la détermination du sous-ensemble étendu pour l'image dans l'ensemble d'images en combinant le premier sous-ensemble voisin et une pluralité de seconds sous-ensembles voisins correspondant aux images dans le premier sous-ensemble voisin ;

pour chacune de la pluralité d'images candidates, la détermination d'un degré de différence étendu entre l'image candidate et l'image cible sur la base d'un sous-ensemble étendu correspondant à l'image candidate et d'un sous-ensemble étendu correspondant à l'image cible par :

la détermination d'un premier degré de différence globale entre l'image cible et le sous-ensemble étendu correspondant à l'image candidate en pondérant une pluralité de degrés de différence entre l'image cible et les images dans le sous-ensemble étendu correspondant à l'image candidate ;
la détermination d'un second degré de différence globale entre l'image candidate et le sous-ensemble étendu correspondant à l'image cible en pondérant une pluralité de degrés de différence entre l'image candidate et les images dans le sous-ensemble étendu correspondant à l'image cible ; et
la détermination du degré de différence étendu entre l'image candidate et l'image cible sur la base du premier degré de différence globale et du second degré de différence globale ; et

l'identification d'une image de résultat avec un plus petit degré de différence étendu parmi la pluralité d'images candidates sur la base des degrés de différence étendus correspondant à la pluralité d'images candidates.

100

130

130-1    130-2         130-3

● ● ●

112    110         120         150

Network    Storage
Device

140

140-1    140-2         140-3

● ● ●

**FIG. 1**

**200**

270

260

250

DISK

I/O

COM
PORTS

210

220

230

240

Processor

ROM

RAM

**FIG. 2**

**300**

**FIG. 3**

**400**

Specifying an image set including the plurality of candidate images to be retrieved and the target image ∿410

For each image in the image set, determining a plurality of image difference degrees between the image and remainder images in the image set ∿420

For each image in the image set, determining an extended neighbor image set corresponding to the image based on image difference degrees among the images in the image set ∿430

For each image in the image set, ranking images in the extended neighbor image set ∿440

For each of the plurality of candidate images, determining an image set difference degree between an extended neighbor image set corresponding to the target image and an extended neighbor image set corresponding to the candidate image and designating the image set difference degree as an extended difference degree between the target image and the candidate image ∿450

Determining a result image corresponding to the target image based on a plurality of extended difference degrees corresponding to the plurality of candidate images ∿460

**FIG. 4**

**500**

For each image in the image set, obtaining a feature vector corresponding to the image by using a trained convolutional neural network — 510

For each image in the image set, determining a plurality of image difference degrees between the image and remainder images in the image set based on feature vectors corresponding to the image and the remainder images in the image set — 520

For each image in the image set, selecting, from the remainder images in the image set, top $N_1$ images based on the plurality of difference degrees between the image and the remainder images as a first neighbor image set corresponding to the image — 530

For each image in the first neighbor image set corresponding to the image, selecting, from the remainder images in the image set, top $N_2$ images based on the plurality of image difference degrees between the image and the remainder images as a second neighbor image set corresponding to the image — 540

For each image in the image set, determining the extended neighbor image set corresponding to the image by combining the first neighbor image set and a plurality of second neighbor image sets corresponding to the images in the first neighbor image set — 550

For each of the plurality of candidate images, determining a target image difference degree between the target image and the extended neighbor image set corresponding to the candidate image — 560

For each of the plurality of candidate images, determining a candidate image difference degree between the candidate image and the extended neighbor image set corresponding to the target image — 570

For each of the plurality of candidate images, determining a mean value of the target image difference degree and the candidate image difference degree as the image set difference degree — 580

Determining the relevant image corresponding to the target image based on a plurality of extended difference degrees corresponding to the plurality of candidate images — 590

**FIG. 5**

<u>**112**</u>

610

Difference Degree
Determination Module

620

Extended Subset
Determination Module

630

Extended Difference
Degree Determination
Module

640

Identification Module

**FIG. 6**

**700**

Determining a plurality of difference degrees associated with an image set including a plurality of candidate images and a target image, each of the plurality of difference degrees corresponding to two images in the image set ⟶ 710

For each image in the image set, determining an extended subset based on the plurality of difference degrees ⟶ 720

For each of the plurality of candidate images, determining an extended difference degree between the candidate image and the target image based on an extended subset corresponding to the candidate image and an extended subset corresponding to the target image ⟶ 730

Identifying a result image corresponding to the target image from the plurality of candidate images based on the extended difference degrees corresponding to the plurality of candidate images ⟶ 740

**FIG. 7**

**800**

| For each image in the image set, determining a feature vector corresponding to the image by using a trained neural network model | 810 |

$\downarrow$

| Determining a difference degree between any two images in the image set based on feature vectors corresponding to the two images | 820 |

**FIG. 8**

900

For each image in the image set, ranking remainder images in the image set based on difference degrees between the remainder images and the image — 910

Determining a first neighbor subset including top N1 images based on the ranking result — 920

For each image in the first neighbor subset, ranking remainder images in the image set based on difference degrees between the remainder images and the image — 930

For each image in the first neighbor subset, determining a second neighbor subset including top N2 images based on the ranking result — 940

Determining the extended subset for the image in the image set by combining the first neighbor subset and a plurality of second neighbor subsets corresponding to the images in the first neighbor sub-set — 950

**FIG. 9**

<u>1000</u>

```
┌─────────────────────────────────────────────────────┐
│  Determining a first global feature vector of the    │      1010
│  extended subset corresponding to the target image   │
└─────────────────────────────────────────────────────┘
                         │
                         ▼
┌─────────────────────────────────────────────────────┐
│  Determining a second global feature vector of the   │      1020
│  extended subset corresponding to the candidate image│
└─────────────────────────────────────────────────────┘
                         │
                         ▼
┌─────────────────────────────────────────────────────┐
│  Determining the extended difference degree between  │      1030
│  the candidate image and the target image based on   │
│  the first global feature vector and the second      │
│  global feature vector                               │
└─────────────────────────────────────────────────────┘
```

**FIG. 10**

<u>**1100**</u>

Determining a first global difference degree between the target image and the extended subset corresponding to the candidate image ~1110

Determining a second global difference degree between the candidate image and the extended subset corresponding to the target image ~1120

Determining the extended difference degree between the candidate image and the target image based on the first global difference degree and the second global difference degree ~1130

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910185837

**Non-patent literature cited in the description**

- **TANG XU et al.** Unsupervised Deep Feature Learning for Remote Sensing Image Retrieval. *REMOTE SENSING,* 07 August 2018, vol. 10 (8